# EUROPEAN PATENT SPECIFICATION

(11) **EP 3 508 436 B1**
(45) Date of publication and mention of the grant of the patent: **20.11.2024**
(21) Application number: 19156252.9
(22) Date of filing: 10.09.2010
(51) Int. Cl.: B01F 23/451, B01F 25/20

(54) **SHELF STABLE CONCENTRATED LIQUIDS**
HALTBARE FLÜSSIGKEITSKONZENTRATE
LIQUIDES CONCENTRÉS STABLES À LA CONSERVATION

(30) Priority: 11.09.2009 US 24158409 P; 01.04.2010 US 32015510 P; 01.04.2010 US 32021810 P; 16.08.2010 US 37417810 P
(43) Date of publication of application: 10.07.2019
(62) Divisional of application: 10757668.8
(73) Proprietor: Kraft Foods Group Brands LLC, Chicago, IL 60601 (US)
(72) Inventor: RAGNARSSON, Karl, Chester, NY New York 10918 (US); PALEJAR, Mangesh, Stamford, CT Connecticut 06902 (US); ALBAUM, Gary J., Pleasantville, NY New York 10570 (US); MACDONALD, Jane Lee, Yorktown Heights, NY New York 10598 (US); SCAROLA, Leonard S., Cary, NC North Carolina 27519 (US)
(74) Representative: Boult Wade Tennant LLP

(56) References cited:
- WO-A1-94/08473
- WO-A2-2006/102435
- GB-A- 2 298 350
- US-A- 4 830 870
- US-A- 5 839 626
- US-A- 6 139 895
- US-A1- 2005 100 639

## Description

### Field

Containers and methods for dispensing a liquid are described herein and, in particular, containers and methods for dispensing multiple doses of a concentrated liquid and a concentrated liquid for use either in combination or independently.

### Background

Concentrated liquids can be used to decrease the size of packaging needed to supply a desired quantity of end result product. Concentrated liquids, however, can include concentrated amounts of dye so that after mixing, the resulting product has the desired coloring. These dyes can stain surfaces, such as clothes, skin, etc., if they come into contact with the surfaces. Due to this, a container storing a concentrated liquid is undesirable if it allows the liquid concentrate to drip or otherwise leak from the container in an uncontrolled manner. One form of container releases a stream of liquid out of an opening when squeezed by a user. When this type of container is utilized to store a concentrated liquid, at least two problems can occur. First, due to the staining problem discussed above, if the concentrated liquid is squeezed from a first container into a second container having a liquid therein, undesirable splashing can occur when the stream of concentrated liquid impacts the liquid in the second container. This splashed material can then stain the surrounding surfaces, as well as the clothes and skin of a user. Additionally, unlike use of squeeze containers storing contents where the amount of material being dispensed can be visually assessed, such as a ketchup or mustard bottle, when dispensing a liquid concentrate into another liquid, it can be difficult for a user to assess how much concentrated liquid has been dispensed in order to achieve the desired end mixture. Yet another problem can occur as the level of concentrated liquid remaining in the container is reduced during repeated uses. In this situation, the amount of concentrated liquid dispensed using the same squeeze force can disadvantageously change significantly as the liquid concentrate level changes within the container.

Liquids, including concentrated liquids, can also be susceptible to spoilage by a variety of microbial agents, particularly if packaged in a container intended for extended shelf life. Reducing food spoilage and increasing shelf life of packaged foods in the past has often involved various combinations of heat, pressure, irradiation, ultrasound, refrigeration, natural and artificial antimicrobial/preservative compositions, and the like. Any useful antimicrobial process or composition can target food specific spoilage agents and minimize its effect on the food products themselves. Prior attempts have used various combinations of preservatives and pasteurization. Current trends in the art seek to reduce the amount of preservatives in food products. Pasteurization adds processing steps and added expense and energy usage to heat the compositions to pasteurizing levels.

Some attempts are known in the art to use acidic combinations since a low pH can have an antimicrobial effect. Nevertheless, for many beverages there is a difficult balance between the high acidity for desired microbial inhibition and an optimum acidity for the desired beverage flavor and stability. See generally, US 6703056 to Mehansho. Some attempts include a balance of pH and alcohol such as disclosed in JP 2000295976 to Nakamura. Nakamura discloses antimicrobial formulations for acidic drinks having ethyl alcohol. But the Nakamura compositions also include emulsifiers and propylene glycol. Nakamura discloses acidic drink compositions that suppress crystallization of sucrose fatty acid ester. Nakamura does not disclose compositions having a pH less than 3.5, nor does it address shelf stable concentrates for acidic drinks.

WO 2006/102435 A2 discloses flavoring composition concentrates.

US 4 830 870 A discloses a method for increasing the stability of a liquid beverage concentrate.

### Summary

In accordance with the present invention there is provided a liquid concentrate in accordance with claim 1.

Also described herein are containers and methods for dispensing a liquid concentrate utilizing one or more desirable properties including a generally consistent discharge across a range of squeeze forces, a generally consistent discharge with the same force without significant dependence on the amount of liquid concentrate in the container, a substantially dripless or leak proof outlet opening, a jet that reduces splashing when the liquid concentrate impacts a target liquid, and a jet that increases mixing between the liquid concentrate and the target liquid to produce a generally homogenous mixture without the use of extraneous utensils or shaking. The container described herein includes a container body with a hinged lid having an outlet spout attached thereto. The container includes a fluid flow path having a nozzle member disposed thereacross to dispense a jet of liquid concentrate from the container having the one or more desirable properties. The container allows for a user to have a relatively small package of a liquid concentrate that can be dispensed in multiple doses over time into a larger quantity of fluid, e.g., water, to make a beverage.

In one form, a packaged liquid beverage concentrate includes a lidded container and a plurality of doses of liquid beverage concentrate. In this form, the lidded container includes a container body, a recloseable lid, and a nozzle member. The container body has a closed bottom end and a top end having a shoulder that narrows to a spout having an outlet opening. A sidewall, which is preferably resilient, extends between the top and bottom ends to define an interior of the container body that is accessible through the outlet opening. The sidewall is flexible so that it can be squeezed to force the liquid beverage concentrate through the outlet opening of the spout. The sidewall further may optionally include a locator region that is inwardly indented. If present, the locator region is preferably positioned closer to the shoulder than to the bottom end of the container body. This provides a tactile indication of where force should be applied when squeezing the sidewall to force the liquid beverage concentrate from the interior of the container body and through the outlet opening of the spout, thereby improving consistency of dispensing. The recloseable lid includes a base portion configured to be attached to the spout of the container body. The base portion includes a spout with an outlet opening coinciding with the outlet opening of the spout of the container body such that the liquid beverage concentrate exits the interior of the container body through the outlet opening of the spout of the base portion. The lid further includes a cover portion that is hinged relative to the base portion to close the outlet opening of the spout of the base portion.

In another form, a packaged product includes a lidded container that includes the container body, the recloseable lid, and the nozzle member and has a plurality of doses of liquid concentrate therein. The container body has an interior to store the liquid concentrate therein. The interior is defined by a sidewall extending between a closed first end and an at least partially open second end. The sidewall includes at least one flexible portion that is configured to deflect under pressure to force the liquid concentrate from the interior of the container body through the at least partially open second end. The sidewall further may optionally include a grip region depressed with respect to adjacent portions of the sidewall and positioned closer to the second end than the first end to indicate that squeezing force should be applied closer to the second end than the first end. The recloseable lid is secured to the at least partially open second end of the container body and includes a base and a cover pivotably attached to the base. The base includes an outwardly protruding spout with an outlet opening. The spout is fluidly connected to the interior of the container body to create a fluid flow path between the interior of the container and the outlet opening such that pressure forcing the liquid concentrate from the interior of the container body forces the liquid concentrate out through the outlet opening of the spout. The nozzle member is disposed across the fluid flow path and has an opening therethrough that is configured to produce a jet of liquid concentrate having a Liquid Concentrate Performance Value of less than 4 upon application of a force on the flexible portion of the sidewall producing a mass flow rate between 1.0 g/s and 1.5 g/s.

In yet another form, a method is described to create a mixture using a jet of liquid concentrate from a container. The method starts by applying pressure to a flexible portion of a sidewall of the container, where the container has a plurality of doses of the liquid concentrate stored therein. The container further includes an outlet opening with a nozzle member disposed thereacross. The nozzle member has an opening therein. A jet of the liquid concentrate is then dispensed from the container through the nozzle member, where the jet has a mass flow between 1.0 g/s and 3.0 g/s, or between 1.0 g/s and 1.5 g/s. A target liquid within a target container is then impacted by the jet such that the impact does not displace a significant amount of fluid from within the target container. The target liquid and the liquid concentrate are then mixed into a generally homogeneous mixture with the jet. Pressure to create the desired dispensing flow can be a function of the fluid viscosity. Viscosity for the liquid concentrate within the present container can be less than about 75 or less than about 500 cP (centipoise), and preferably in the range of about 1 to 25 cP.

Suitable for use independently or in combination with the containers described herein, methods and compositions are provided for liquid beverage concentrates that can be cold filled during packaging while maintaining shelf stability for at least twelve months at ambient temperatures. This can be achieved through a combination of low pH and high alcohol content to provide stability to otherwise unstable ingredients. Advantageously, an acidic drink concentrate can result that is shelf stable at ambient temperatures for at least twelve months and does not require added preservatives or pasteurization.

The pH of the concentrate can be less than about 3 or 3.5 (only 1.7 to 2.4 is in accordance with the present invention) and alcohol content at least 1 percent by weight. In some embodiments, the compositions and methods can include a cold-filled beverage concentrate using a combination of low pH (such as less than about 3) (only 1.7 to 2.4 is in accordance with the present invention) and alcohol (preferably 5 to about 35 percent weight). Various supplemental salt combinations (such as electrolytes) can be added to about 0.01 up to about 35 percent by weight. The supplemental salt can lower the composition's water activity to further provide antimicrobial stability. This results in a liquid beverage concentrate composition that can be shelf stable for at least 12 months; can be concentrated to at least 75 times, such that the concentrate will form 1/75 or less of the beverage (and preferably up to 100 times, such that the concentrate will form 1/100 or less of the beverage); and have water activity in the range of about 0.6 up to 1.0, and preferably in the range of about 0.75 to up to 1.0.

The concentrates can contain any combination of additives or ingredients such as water flavoring, nutrients, coloring, sweetener, salts, buffers, gums, caffeine, stabilizers, and the like. Optional preservatives, such as sorbate or benzoate can be included, but would not be needed to maintain shelf stability. The concentrate can be concentrated between about 25 to 500 times, between about 75 to 160 times, or between about 40 to 500 times, and have a pH between about 1.4 to about 3.0 or 3.5. The pH can be established using any combination of food-grade acid such as malic acid, adipic acid, citric acid, fumaric acid, tartaric acid, phosphoric acid, lactic acid, or any other food grade organic or inorganic acid. Acid selection can be a function of the desired concentrate pH and desired taste of the diluted ready-to-drink product. Buffers can also be used to regulate the pH of the concentrate, such as the conjugated base of any acid, e.g., sodium citrate, potassium citrate, acetates and phosphates. The concentrates can have a buffer for the acid with a total acid:buffer weight ratio range of about 1:1 or higher, such as 1:1 to 4000:1, preferably about 1:1 to about 40:1, and most preferably about 7:1 to about 15:1. The potable beverage can be a dilution of the concentrate such that it has, for example, less than about 0.5 percent alcohol by volume.

Methods to make the concentrates can include providing water and additives; providing at least 5 percent by weight of alcohol; adjusting the pH of the concentrate to less than about 3, and preferably to a pH of about 2.5 or less. Again, additives can be flavoring, nutrients, coloring, sweetener, salts, buffers, gums and stabilizers. The concentrates can be packaged in an airtight seal without pasteurization. The method to make the concentrate can optionally include the steps of providing a predetermined amount of water; providing potassium citrate; providing sweetener; providing acids in an amount predetermined to achieve a pH of no more than about 3; providing color; providing at least 5 percent by weight of alcohol; and providing flavoring.

### Brief Description of the Drawings

FIGURE 1 is a perspective view of a container showing a lid in a closed position;
FIGURE 2 is a schematic perspective view of the container of FIGURE 1 being squeezed to dispense a jet of liquid therefrom into a container housing a second liquid;
FIGURE 3 is an enlarged top plan view of a spout and nozzle of the lid of FIGURE 1;
FIGURE 4 is an enlarged top plan view of a spout and nozzle of the lid of FIGURE 1;
FIGURE 5 is a perspective view of an alternative container showing a lid in a closed position;
FIGURE 6 is a perspective view of an alternative container showing a lid in a closed position;
FIGURE 7 is a bottom perspective of a representation of the results of the mixing ability test for tested nozzles showing beakers with varying levels of mixture;
FIGURE 8 is a top plan view of a representation of the results of an impact splatter test for a tested nozzle showing a coffee filter with splatter marks thereon;
FIGURE 9 is a top plan view of a representation of the results of an impact splatter test for a tested nozzle showing a coffee filter with splatter marks thereon;
FIGURE 10 is a top plan view of a representation of the results of an impact splatter test for a tested nozzle showing a coffee filter with splatter marks thereon;
FIGURE 11 is a top plan view of a representation of the results of an impact splatter test for a tested nozzle showing a coffee filter with splatter marks thereon;
FIGURE 12 is a top plan view of a representation of the results of an impact splatter test for a tested nozzle showing a coffee filter with splatter marks thereon;
FIGURE 13 is a top plan view of a representation of the results of an impact splatter test for a tested nozzle showing a coffee filter with splatter marks thereon;
FIGURE 14 is a top plan view of a representation of the results of an impact splatter test for a tested nozzle showing a coffee filter with splatter marks thereon;
FIGURE 15 is a graph showing Mixing Ability Value and Impact Splash Factor for tested nozzles;
FIGURE 16 is a graph showing the difference of the Mass Flow between easy and hard forces for tested nozzles;
FIGURE 17 is a graph showing the difference of the Momentum-Second between easy and hard forces for tested nozzles;
FIGURE 18 is a graph showing the maximum difference between two Linearity of Flow test data points for tested nozzles;
FIGURE 19 is an exploded perspective view of a container and lid; and
FIGURE 20 is a perspective view of the underside of the lid of FIGURE 19.

### Detailed Description

A container 10 and methods are described for dispensing a liquid concentrate in a desirable manner. Desirable properties include, for example, generally consistent discharge across a range of squeeze forces, generally consistent discharge with the same force without significant dependence on the amount of liquid concentrate in the container, a substantially dripless or leak proof outlet opening, a jet that limits splashing when the liquid concentrate enters another liquid, and a jet that promotes mixing between the liquid concentrate and the other liquid. The container 10 utilizes some or all of these properties while dispensing a jet of the liquid concentrate into a target container having a target liquid therein. The container 10 described herein dispenses the liquid concentrate in such a way as to enter the target liquid without substantial splashing or splatter while also causing sufficient turbulence or mixing within the target container between the liquid concentrate and the target liquid to form a generally homogenous end mixture without the use of extraneous utensils or shaking.

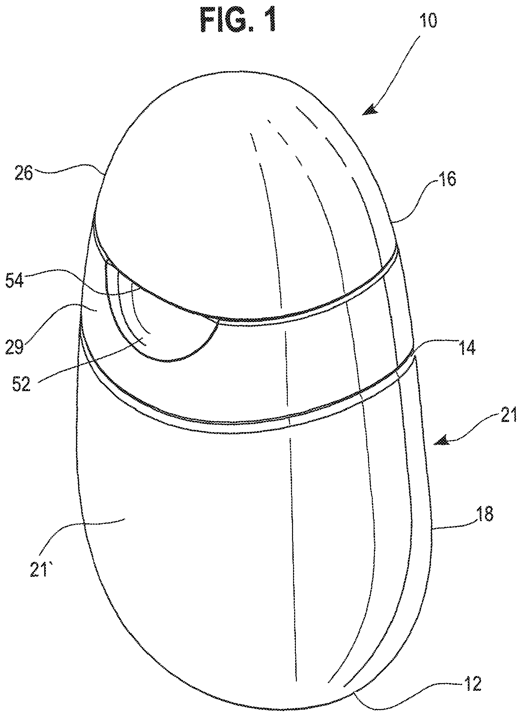

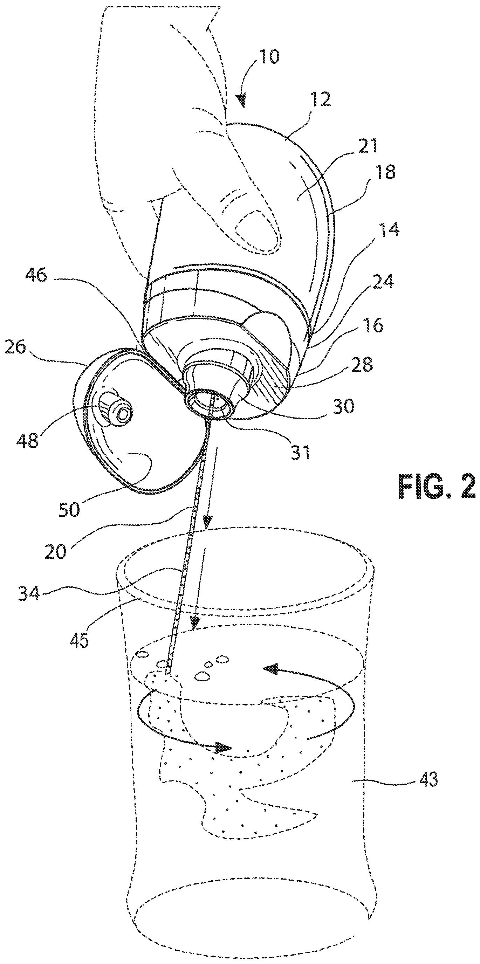

Referring now to FIGS. 1-6, exemplary forms of the container 10 are shown with at least some, and preferably all, of the above properties. The container includes a closed first end 12 and an at least partially open second end 14 configured to be securable to a closure 16. The first and second ends 12, 14 are connected by a generally tubular sidewall 18, which can take any suitable cross section, including any polygonal shape, any curvilinear shape, or any combination thereof, to form an interior. Preferably, the container 10 is sized to include a plurality of serving sizes of liquid concentrate 20 therein. In one example, a serving size of the liquid concentrate 20 is approximately 2 cubic centimeters (cc) per 240 cc of beverage and the container 10 is sized to hold approximately 60 cc of the liquid concentrate 20. In another example, the container 10 could contain approximately 48 cc of the liquid concentrate 20.

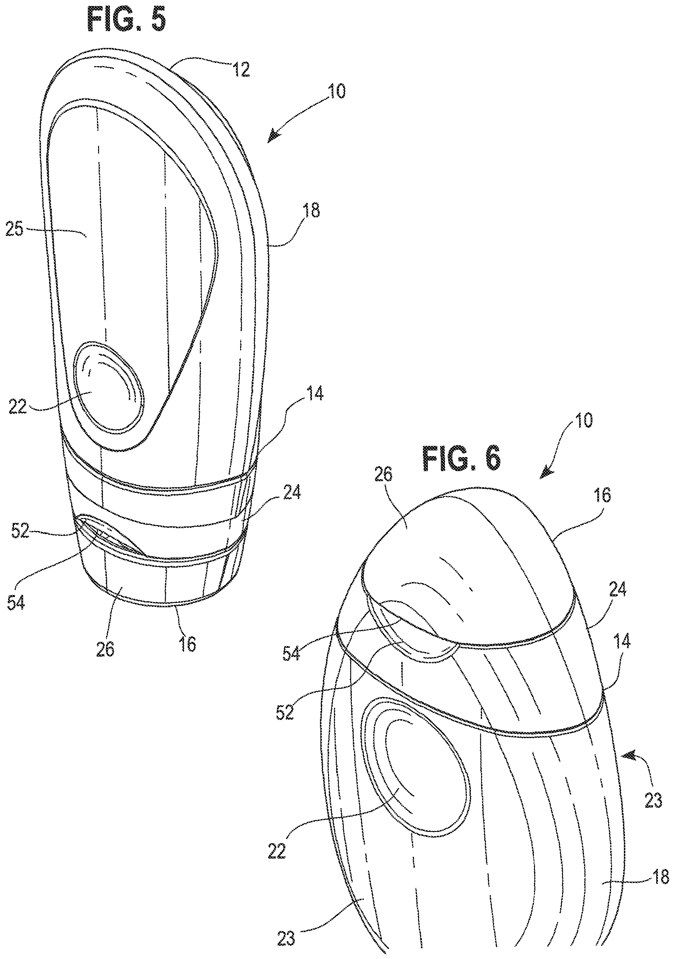

Example shapes of the container 10 are illustrated in FIGS. 1, 3, and 4. In FIGS. 1 and 5, the illustrated container 10 includes the first end 12, which acts as a secure base for the container 10 to rest upon. The sidewall 18 extends generally upward from the base to the second end 14. As discussed above, the closure 16 is secured to the second end 14 by any suitable mechanism, including, for example, a threaded neck, a snap-fit neck, adhesive, ultrasonic welding, or the like. In the preferred form, the second end 14 includes an upwardly facing shoulder that tapers to a spout configured to connect with the closure 16 by snap-fit. In one example in FIG. 1, the container 10 can be generally egg-shaped where front and rear surfaces 21 curve generally outwardly and provide an ergonomic container shape. In another example in FIG. 6, the sidewall 18 includes front and rear surfaces 23 that are generally drop-shaped so that the container 10 has an oblong cross-section.

Alternatively, as shown in FIG. 5, the container 10 can be configured to rest on the closure 16 attached to the second end 14. In this form, the closure 16 has a generally flat top surface so that the container 10 can securely rest on the closure 16. Additionally, because the first end 12 is not required to provide a base for the container 10, the sidewall 18 of this form can taper as the sidewall 18 transitions from the second end 14 to the first end 12 to form a narrow first end 12, such as in the rounded configuration shown in FIG. 5. The sidewall 18 may further include a recessed panel 25 therein, which can be complementary to the shape of the sidewall 18 in a front view, such as an inverted drop shape shown in FIG. 5.

Additionally, as shown in FIGS. 5 and 6, the sidewall 18 may further optionally include a depression 22 to act as a grip region. In one form, the depression 22 is generally horizontally centered on the sidewall 18 of the container 10. Preferably, if present, the depression 22 is positioned closer to the second end 14 than the first end 12. This is preferable because as the liquid concentrate 20 is dispensed from the container 10, headspace is increased in the container 10 which is filled with air. The liquid concentrate 20 is dispensed in a more uniform manner if pressure is applied to locations of the container 10 where the liquid concentrate 20 is present rather than places where the headspace is present. When dispensing the liquid concentrate 20, the container 10 is turned so that the second end 14 and the closure 16 are lower than the first end 12, so the first end 12 will enclose any air in the container 10 during dispensing. So configured, the depression 22 acts as a thumb or finger locator for a user to utilize to dispense the liquid concentrate 20. As illustrated, the depression 22 may be generally circular; however, other shapes can be utilized, such as polygons, curvilinear shapes, or combinations thereof.

Examples of the closure 16 are illustrated in FIGS. 1-6. In these examples, the closure 16 is a flip top cap having a base 24 and a cover 26. An underside of the base 24 defines an opening therein configured to connect to the second end 14 of the container 10 and fluidly connect to the interior of the container 10. A top surface 28 of the base 24 includes a spout 30 defining an outlet opening 31 extending outwardly therefrom. The spout 30 extends the opening defined by the underside of the base 24 to provide an exit or fluid flow path for the liquid concentrate 20 stored in the interior of the container 10.

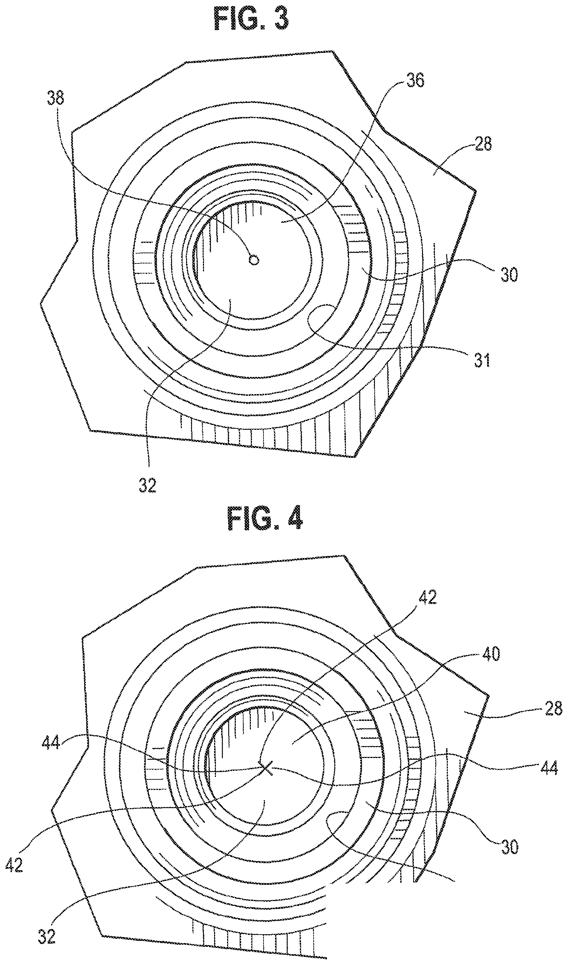

By one approach, the spout 30 includes a nozzle 32 disposed therein, such as across the fluid flow path, that is configured to restrict fluid flow from the container 10 to form a jet 34 of liquid concentrate 20. FIGS. 3 and 4 illustrate example forms of the nozzle 32 for use in the container 10. In FIG. 3, the nozzle 32 includes a generally flat plate 36 having a hole, bore, or orifice 38 therethrough. The bore 38 may be straight edged or have tapered walls. Alternatively, as shown in FIG. 4, the nozzle 32 includes a generally flat, flexible plate 40, which may be composed of silicone or the like, having a plurality of slits 42 therein, and preferably two intersecting slits 42 forming four generally triangular flaps 44. So configured, when the container 10 is squeezed, such as by depressing the sidewall 18 at the recess 22, the liquid concentrate 20 is forced against the nozzle 32 which outwardly displaces the flaps 44 to allow the liquid concentrate 20 to flow therethrough. The jet 34 of liquid concentrate formed by the nozzle 32 combines velocity and mass flow to impact a target liquid 43 within a target container 45 to cause turbulence in the target liquid 43 and create a generally uniform mixed end product without the use of extraneous utensils or shaking.

The cover 26 of the closure 16 is generally dome-shaped and configured to fit over the spout 30 projecting from the base 24. In the illustrated form, the lid 26 is pivotably connected to the base 24 by a hinge 46. The lid 26 may further include a stopper 48 projecting from an interior surface 50 of the lid. Preferably, the stopper 48 is sized to fit snugly within the spout 30 to provide additional protection against unintended dispensing of the liquid concentrate 20 or other leakage. Additionally in one form, the lid 26 can be configured to snap fit with the base 24 to close off access to the interior 19 of the container 10. In this form, a recessed portion 52 can be provided in the base 24 configured to be adjacent the cover 26 when the cover 26 is pivoted to a closed position. The recessed portion 52 can then provide access to a ledge 54 of the cover 26 so that a user can manipulate the ledge 54 to open the cover 26.

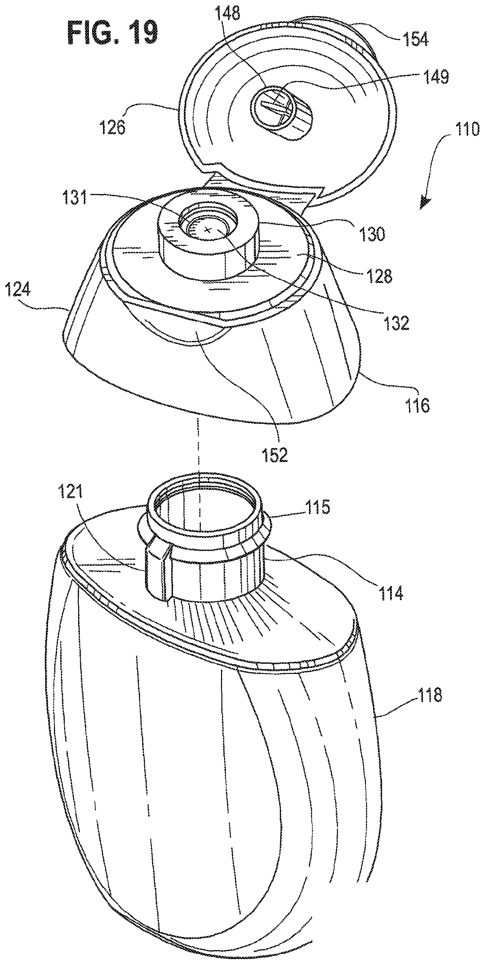

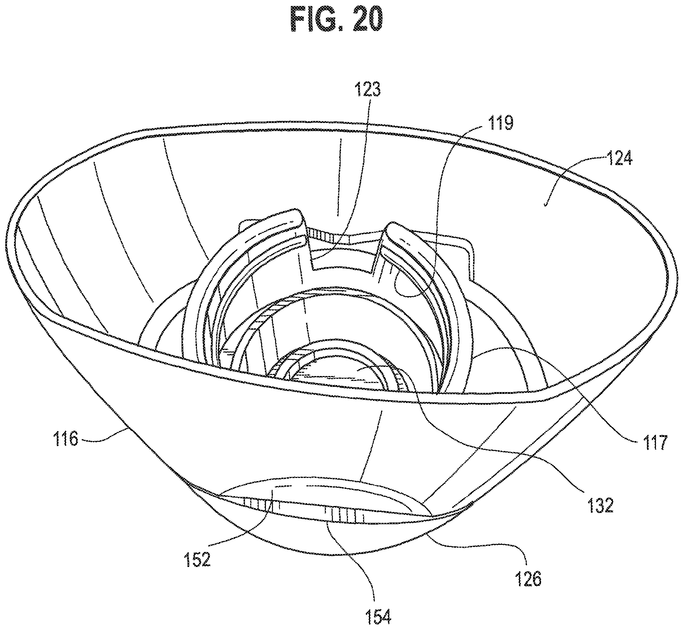

An alternative container 110 is similar to those of FIGS. 1-6, but includes a modified closure 116 and modified neck or second end 114 of the container 110 as illustrated in FIGS. 19 and 20. Like the foregoing container, the closure of the alternative exemplary container is a flip top cap having a base 124 and a hinged cover 126. An underside of the base 124 defines an opening therein configured to connect to the second end 114 of the container 110 and fluidly connect to the interior of the container 110. A top surface 128 of the base 124 includes a spout 130 defining an outlet opening 131 extending outwardly therefrom. The spout 130 extends from the opening defined by the underside of the base 124 to provide an exit or fluid flow path for the liquid concentrate stored in the interior of the container 110. The spout 130 includes a nozzle 132 disposed therein, such as across the fluid flow path, that is configured to restrict fluid flow from the container 110 to form a jet of liquid concentrate. The nozzle 132 can be of the types illustrated in FIGS. 3 and 4 and described herein.

Like the prior container, the cover 126 of the closure 116 is generally dome shaped and configured to fit over the spout 130 projecting from the base 124. The lid 126 may further include a stopper 148 projecting from an interior surface 150 of the lid. Preferably, the stopper 148 is sized to snugly fit within the spout 130 to provide additional protection against unintended dispensing of the liquid concentrate or other leakage. The stopper 148 can be a hollow, cylindrical projection, as illustrated in FIGS. 19 and 20. An optional inner plug 149 can be disposed within the stopper 148 and may project further therefrom. The inner plug 149 can contact the flexible plate 40 of the nozzle 32 to restrict movement of the plate 40 from a concave orientation, whereby the flaps are closed, to a convex orientation, whereby the flaps are at least partially open for dispensing. The inner plug 149 can further restrict leakage or dripping from the interior of the container 110. The stopper 148 and/or plug 149 cooperate with the nozzle 132 and/or the spout 130 to at least partially block fluid flow.

The stopper 148 can be configured to cooperate with the spout 130 to provide one, two or more audible and/or tactile responses to a user during closing. For example, sliding movement of the rearward portion of the stopper 148 past the rearward portion of the spout 130 - closer to the hinge - can result in an audible and tactile response as the cover 126 is moved toward a closed position. Further movement of the cover 126 toward its closed position can result in a second audible and tactile response as the forward portion of the stopper slides past a forward portion of the spout 130 - on an opposite side of the respective rearward portions from the hinge. Preferably the second audible and tactile response occurs just prior to the cover 126 being fully closed. This can provide audible and/or tactile feedback to the user that the cover 126 is closed.

The cover 126 can be configured to snap fit with the base 124 to close off access to the interior of the container 110. In this form, a recessed portion 152 can be provided in the base 124 configured to be adjacent the cover 126 when the cover 126 is pivoted to a closed position. The recessed portion 152 can then provide access to a ledge 154 of the cover 126 so that a user can manipulate the ledge 154 to open the cover 126.

To attach the closure 116 to the neck 114 of the container 110, the neck 114 includes a circumferential, radially projecting inclined ramp 115. A skirt 117 depending from the underside of the base 124 of the closure 116 includes an inwardly extending rib 119. The rib 119 is positioned on the skirt 117 such that it can slide along and then to a position past the ramp 115 to attach the closure 116 to the neck 114. Preferably, the ramp 115 is configured such that lesser force is required to attach the closure 116 as compared to remove the closure 116. In order to limit rotational movement of the closure 116 once mounted on the container 110, one or more axially extending and outwardly projecting protuberances 121 are formed on the neck 114. Each protuberance 121 is received within a slot 123 formed in the skirt 117 of the closure 116. Engagement between side edges of the protuberance 121 and side edges of the slot 123 restrict rotation of the closure 116 and maintain the closure 116 in a preferred orientation, particularly suitable when portions of the closure 116 is designed to be substantially flush with the sidewall 118 of the container 110. In FIGS. 19 and 20, two protuberances 121 and two slots 123, each spaced 180 degrees apart.

The containers described herein may have resilient sidewalls that permit them to be squeezed to dispense the liquid concentrate or other contents. By resilient, it is meant that they return to or at least substantially return to their original configuration when no longer squeezed. Further, the containers may be provided with structural limiters for limiting displacement of the sidewall, i.e., the degree to which the sidewalls can be squeezed. This can advantageous contribute to the consistency of the discharge of contents from the containers. For example, the foregoing depression can function as a limiter, whereby it can contact the opposing portion of the sidewall to limit further squeezing of opposing sidewall portions together. The depth and/or thickness of the depression can be varied to provide the desired degree of limiting. Other structural protuberances of one or both sidewalls (such as opposing depressions or protuberances) can function as limiters, as can structural inserts.

Advantages of the container described herein are further illustrated by the following examples; however, the particular conditions, processing schemes, materials, and amounts thereof recited in these examples, as well as other conditions and details, should not be construed to limit this method and apparatus.

### EXAMPLES

Tests were performed using a variety of nozzles as the discharge opening in a container made from high-density polyethylene (HDPE) and ethylene vinyl alcohol (EVOH) with a capacity of approximately 60 cc. Table 1 below shows the nozzles tested and the abbreviation used for each.

**Table 1: Nozzles Tested**

| **Long Name** | **Abbreviation** |
|---|---|
| SLA Square Edge Orifice 0.015" | O_015 |
| SLA Square Edge Orifice 0.020" | O_020 |
| SLA Square Edge Orifice 0.025" | O_025 |
| LMS V21 Engine 0.070" X Slit | V21_070 |
| LMS V21 Engine 0.100" X Slit | V21_100 |
| LMS V21 Engine 0.145" X Slit | V21_145 |
| LMS V21 Engine 0.200" X Slit | V21_200 |

The SLA Square Edge Orifice nozzles each have a front plate with a straight-edged circular opening therethrough, and were made using stereolithography. The number following the opening identification is the approximate diameter of the opening. The LMS refers to a silicone valve disposed in a nozzle having an X shaped slit therethrough, and are available from Liquid Molding Systems, Inc. ("LMS") of Midland, Michigan. The slit is designed to flex to allow product to be dispensed from the container and at least partially return to its original position to seal against unwanted flow of the liquid through the valve. This advantageously protects against dripping of the liquid stored in the container, which is important for liquid concentrates, as discussed above. The number following is the approximate length of each segment of the X slit. When combined with the containers described herein, the valve is believed to permit atmospheric gasses to flow into the container body during a cleaning phase when the squeeze force is released effective to clean the valve and upstream portions of an exit path through the container and/or closure. Further, such a combination is believed to provide for controllable flow of the concentrate when the valve is generally downwardly directed such that gases which enter during the cleaning phase are remote from the exit path. Another suitable valve is the LMS V25 Engine 0.070 X Slit.

An important feature for the nozzle is the ability to mix the dispelled liquid concentrate with the target liquid, usually water, using only the force created by spraying the liquid concentrate into the water. Acidity (pH) levels can be utilized to evaluate how well two liquids have been mixed. For example, a liquid concentrate poured from a cup leaves distinct dark and light bands. A jet of the liquid concentrate, however, tends to shoot to the bottom of the target container and then swirl back up to the top of the target liquid, which greatly reduces the color difference between the bands. Advantageously, pH levels can also be utilized in real time to determine mixture composition. Testing included dispensing 4 cc of liquid concentrate in 500 ml of DI H2O at room temperature of 25 degree Celsius. The pour was done from a small shot glass, while the jet was produced by a 6 cc syringe with an approximately 0.127 cm (0.050 inch) opening. Mixing refers to a Magnastir mixer until steady state was achieved.

**Table 2: pH Mixing Data**

| | **Pour** | | | | **Jet** | | | | | |
|---|---|---|---|---|---|---|---|---|---|---|
| | **Rep 1** | | **Rep 2** | | **Slow (∼1.5 s)** | | **Med (∼1 s)** | | **Fast (∼0.5 s)** | |
| **Time** | **Bottom** | **Top** | **Bottom** | **Top** | **Bottom** | **Top** | **Bottom** | **Top** | **Bottom** | **Top** |
| 0 | 5.42 | 5.34 | 5.40 | 5.64 | 5.50 | 5.54 | 5.54 | 5.48 | 5.56 | 5.59 |
| 5 | 3.57 | 4.90 | 3.52 | 5.00 | 3.19 | 4.10 | 3.30 | 3.70 | 2.81 | 2.90 |
| 10 | 3.37 | 4.70 | 3.33 | 4.80 | 2.97 | 3.20 | 3.25 | 3.45 | 2.78 | 2.80 |
| 15 | 3.33 | 4.70 | 3.22 | 4.70 | 3.00 | 3.10 | 3.27 | 3.40 | 2.77 | 2.78 |
| 20 | 3.32 | 4.60 | 3.16 | 4.70 | 3.01 | 3.10 | 3.13 | 3.30 | 2.75 | 2.80 |
| 25 | 3.31 | 4.60 | 3.12 | 4.70 | 3.01 | 3.08 | 3.08 | 3.20 | 2.74 | 2.80 |
| 30 | 3.31 | 4.50 | 3.10 | 4.70 | 3.01 | 3.07 | 3.06 | 3.18 | 2.73 | 2.75 |
| 35 | 3.30 | 4.30 | 3.09 | 4.70 | 3.00 | 3.06 | 3.05 | 3.17 | 2.72 | 2.75 |
| 40 | 3.28 | 4.25 | 3.10 | 4.70 | 3.00 | 3.07 | 3.06 | 3.17 | 2.71 | 2.70 |
| Mixed | 2.78 | | 2.70 | | 2.67 | | 2.70 | | 2.65 | |

After forty seconds, the pour produces results of 3.28 on the bottom and 4.25 on the top in the first rep and 3.10 and 4.70 on the top in the second rep. The jet, however, was tested using a slow, a medium, and a fast dispense. After forty seconds, the slow dispense resulted in a 3.07 on the bottom and a 3.17 on the top, the medium dispense resulted in a 3.06 on the bottom and a 3.17 on the top, and the fast dispense resulted in a 2.71 on the bottom and a 2.70 on the top. Accordingly, these results show the effectiveness of utilizing a jet of liquid concentrate to mix the liquid concentrate with the target liquid. An effective jet of liquid concentrate can therefore provide a mixture having a variance of pH between the top and the bottom of a container of approximately 0.3. In fact, this result was achieved within 10 seconds of dispense.

Accordingly, each nozzle was tested to determine a Mixing Ability Value. The Mixing Ability Value is a visual test measured on a scale of 1-4 where 1 is excellent, 2 is good, 3 is fair, and 4 is poor. Poor coincides with a container having unmixed layers of liquid, i.e., a water layer resting on the liquid concentrate layer, or an otherwise inoperable nozzle. Fair coincides with a container having a small amount of mixing between the water and the liquid concentrate, but ultimately having distinct layers of liquid concentrate and water, or the nozzle operates poorly for some reason. Good coincides with a container having desirable mixing over more than half of the container while also having small layers of water and liquid concentrate on either side of the mixed liquid. Excellent coincides with a desirable and well mixed liquid with no significant or minor, readily-identifiable separation of layers of liquid concentrate or water.

The test dispensed 4 cc of liquid concentrate, which was 125g citric acid in 500 g H20 5% SN949603 (Flavor) and Blue #2 1.09 g/cc, into a glass 250 ml Beaker having 240 ml of water therein. The liquid concentrate has a viscosity of approximately 4 centipoises. Table 3A below shows the results of the mixing test and the Mixing Ability Value of each nozzle.

**Table 3A: Mixing Ability Value of each nozzle**

| **Nozzle** | **Mixing Ability Value** |
|---|---|
| O_015 | 3 |
| O_020 | 2 |
| O_025 | 1 |
| V21_070 | 1 |
| V21_100 | 1 |
| V21_145 | 2 |
| V21_200 | 2 |

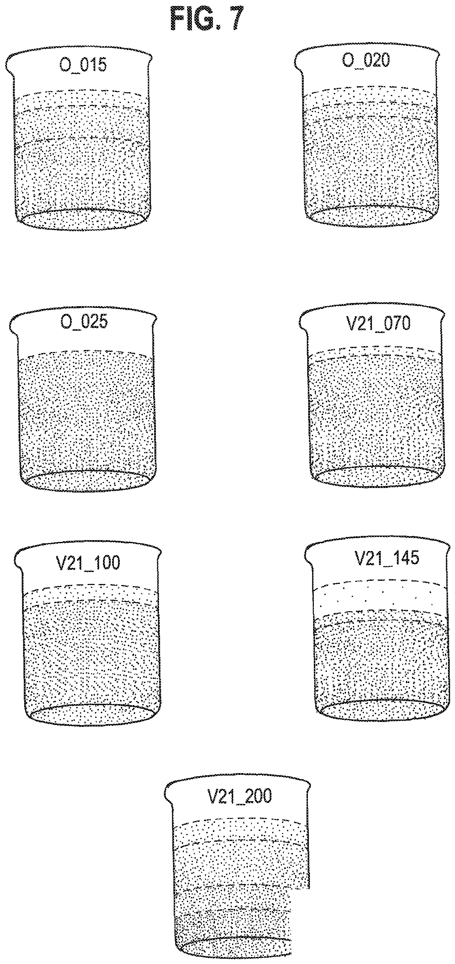

As illustrated in FIG. 7, a representation of the resulting beaker of the mixing ability test for each tested nozzle is shown. Dashed lines have been added to indicate the approximate boundaries between readily-identifiable, separate layers. From the above table and the drawings in FIG. 7, the 0.064 cm (0.025 inch) diameter Square Edge Orifice, the 0.18 cm (0.070 inch) X Slit, and the 0.254 cm (0.100 inch) X Slit all produced mixed liquids with an excellent Mixing Ability Value where the beaker displayed a homogeneous mixture with a generally uniform color throughout. The 0.051 cm (0.020 inch) diameter Square Edge Orifice, the 0.368 cm (0.145 inch) X Slit, and the 0.508 cm (0.200 inch) X Slit produced mixed liquids with a good Mixing Ability Value, where there were small layers of water and liquid concentrate visible after the 4 cc of liquid concentrate had been dispensed. The 0.038 cm (0.015 inch) Square Edge Orifice produced a mixed liquid that would have qualified for a good Mixing Ability Value, but was given a poor Mixing Ability Value due to the amount of time it took to dispense the 4 cc of liquid concentrate, which was viewed as undesirable to a potential consumer.

Another test measured the Mixing Ability Value based upon the squeeze pressure by injecting a pulse of air into the container with various valve configurations. More specifically, the test was performed for a calibrated "easy," "medium," and "hard" simulated squeeze. A pulse of pressurized air injected into the container simulates a squeeze force (although the test does not actually squeeze the sidewalls). At the start of every test repetition, an air pressure regulator is set to the desired pressure. The output from the air pressure regulator is connected via tubing to a pressure tight fitting set into an aperture formed in the center portion of the bottom of the container. The container can be between about 10 degrees and 0 degrees from vertical. About 2 feet of 5/32" tubing extends from a pneumatic push button valve downstream of the air pressure regulator to the pressure tight fitting. The container is filled for each test to its preferred maximum volume (which can be less than the total volume of the container). The push button is depressed a time calculated to result in a target dosage volume. The nozzle of the container is disposed between 5 and 10 cm (2 and 4 inches) above the target. This same protocol was used to determine other parameters associated with simulated squeezes, discussed herein.

The results are consistent with the actual squeeze testing, and show that the larger X Slit nozzles cause more splashing. For the simulated squeeze examples herein, the time was that required to dispense 4 cc of beverage concentrate from a container having about 49 cc of concentrate in a total volume of about 65 cc. The container had the shape similar to that illustrated in FIG. 6, a 24-410 screw cap for holding the nozzle, a high density polyethylene wall with a thickness of about 0.08 cm (0.03 inches), a span from the bottom of the container to the valve of about 8 cm (3 inches), a thickness of about 1.1 thick and about 5.72 cm (2.25 inches) at maximum width with a neck of about 2.5 cm (an inch) in diameter. The concentrate had a density of about 1.1 gm/cc, 4 cP and color sufficient to provide an indication of color in the final beverage. The results of the simulated Mixing Ability Value are set forth in below Table 3B.

**Table 3B: Mixing Ability Value of each nozzle (simulated squeeze)**

| **Nozzle** | **Easy Squeeze Pressure (40) (inch WC)** | **Medium Squeeze Pressure (60) (inch WC)** | **Hard Squeeze Pressure (100) (inch WC)** | **Average Mixing Ability Value** |
|---|---|---|---|---|
| O_015 | 1 | 2 | 2 | 1.67 |
| O_020 | 2 | 2 | 1 | 1.67 |
| O_025 | 2 | 1 | 1 | 1.33 |
| V21_070 | 3 | 2 | 1 | 2.00 |
| V21_100 | 2 | 1 | 1 | 1.33 |
| V21_145 | 3 | 1 | 1 | 1.67 |
| V21_200 | 1 | 1 | 1 | 1.00 |

As discussed above, another important feature for a nozzle utilized to dispense liquid concentrate is the amount of splashing or splatter that occurs when the liquid concentrate is dispensed into a container of liquid. The concentrated dyes within the liquid concentrate can stain surrounding surfaces, as well as the clothes and skin of the user of the container. Due to this, each nozzle was also tested for an Impact Splatter Factor. The Impact Splatter Factor test utilized a 400 ml beaker having water dyed blue filled to 2.5 cm (1 inch) from the rim of the beaker. A circular coffee filter was then secured to the beaker using a rubber band, such that the filter had a generally flat surface positioned 2.5 cm (1 inch) above the rim of the beaker. By being positioned 2.5 cm (an inch) above the rim of the beaker, the coffee filter included a sidewall that when splashed indicated liquid exiting the beaker in a sideways orientation, which due to the dyes discussed above, is undesirable. The coffee filter also included a cutout extending slightly onto the upper surface so that the liquid could be dispensed into the container. A bottle having the nozzles secured thereto was then held above the perimeter of the beaker and liquid was dispensed to the center of the beaker five times. The coffee filter was subsequently removed and examined to determine the Impact Splatter Factor for each nozzle. The Impact Splatter Factor is a visual test measured on a scale of 1-4 where 1 is excellent, 2 is good, 3 is fair, and 4 is poor. Excellent coincides with a filter having no or small splashes in the center area of the filter positioned above the beaker and substantially minimal to no splashes outside of this center area. Good coincides with a filter having splashes in the center area and small splashes outside of the center area. Fair coincides with splashes in the center area and medium size splashes outside of the center area. Poor coincides with a filter having splashes in the center area and large splashes outside of the center area.

**Table 4A: Impact Splatter Factor of each nozzle**

| **Nozzle** | **Impact Splatter Factor** |
|---|---|
| O_015 | 1 |
| O_020 | 1 |
| O_025 | 2 |
| V21_070 | 1 |
| V21_100 | 3 |
| V21_145 | 3 |
| V21_200 | 4 |

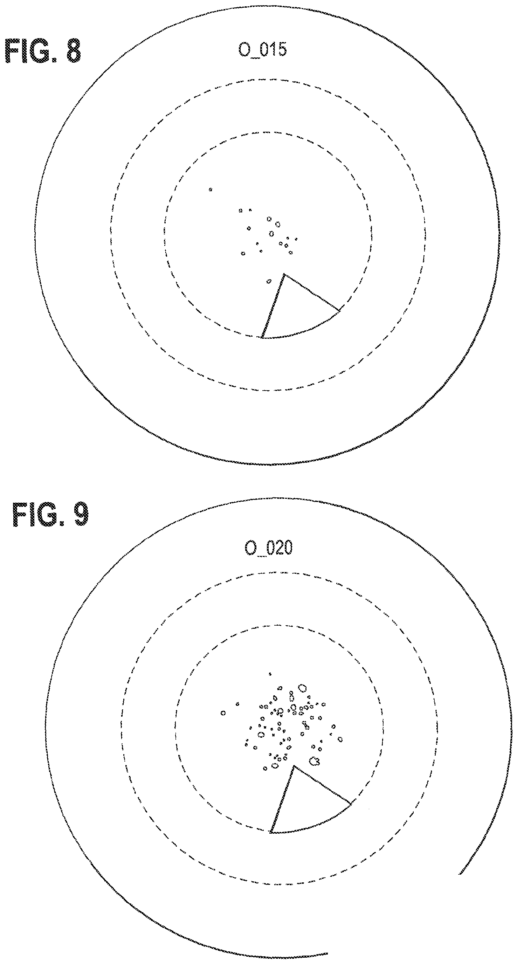

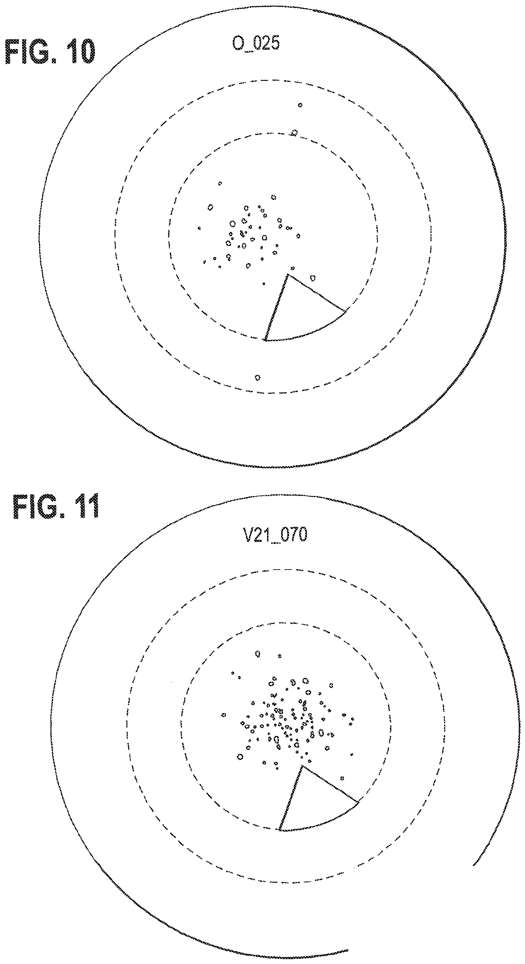

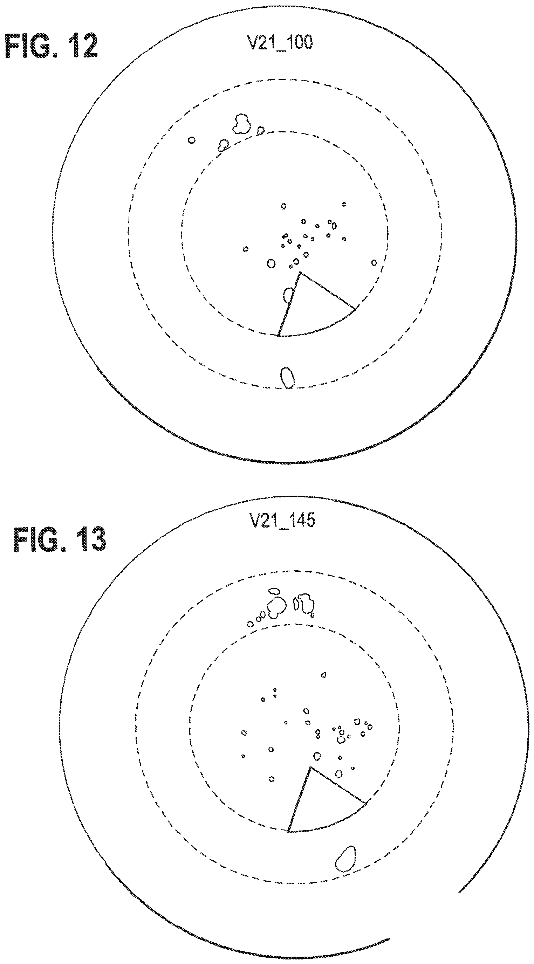

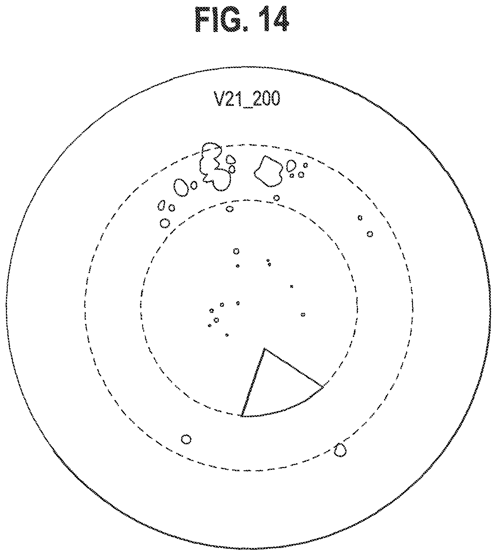

As illustrated in FIGS. 8-14 and set forth in Table 4A above, Impact Splatter Factors were identified for each nozzle tested. The 0.038 cm (0.015 inch) and the 0.051 cm (0.020 inch) Square Edge Orifice, as well as the 0.18 cm (0.070 inch) X Slit nozzle received an excellent Impact Splatter Factor because the splatter created by the jet of liquid did not create substantial splatter marks on the sidewall of the coffee filter during testing, as illustrated in FIGS. 8, 9, and 11 respectively. The 0.064 cm (0.025 inch) Square Edge Orifice caused a few small splatter marks to impact the sidewall of the coffee filter as illustrated in FIG. 10 and therefore received an Impact Splatter Factor of 2. The 0.254 cm (0.100 inch) and the 0.368 cm (0.145 inch) X Slit nozzles caused large splatter marks to impact the sidewall as illustrated in FIGS. 12 and 13 and accordingly received an Impact Splatter Factor of 3. Finally, the 0.508 cm (0.200 inch) X Slit nozzle caused substantial marks on the sidewall of the coffee filter, which indicates that a large amount of liquid was forced outward from the beaker. Due to this, the 0.508 cm (0.200 inch) X Slit nozzle received an Impact Splatter Factor of 4.

A similar test to determine the Impact Splatter Factor as discussed above was performed, but with a controlled "easy," "medium," and "hard" air pulse meant to simulate a squeeze force (although the test does not actually squeeze the sidewalls). At the start of every test repetition, an air pressure regulator is set to the desired pressure. The output from the air pressure regulator is connected via tubing to a pressure tight fitting set into an aperture formed in the center portion of the bottom of the container. The container can be between about 10 degrees and 0 degrees from vertical. About 2 feet of 5/32" tubing extends from a pneumatic push button valve downstream of the air pressure regulator to the pressure tight fitting. The container is filled for each test to its preferred maximum volume (which can be less than the total volume of the container). The push button is depressed a time calculated to result in a target dosage volume. The nozzle of the container is disposed between 5 and 10 cm (2 and 4 inches) above the target. This simulated squeeze testing was performed The results are consistent with the actual squeeze testing, and show that the larger X Slit nozzles cause more splashing. For the simulated squeeze examples herein, the time was that required to dispense 4 cc of beverage concentrate from a container having about 49 cc of concentrate in a total volume of about 65 cc. The container had the shape similar to that illustrated in FIG. 6, a high density polyethylene wall with a thickness of about (0.08 cm) 0.03 inches, a span from the bottom of the container to the valve of about 8 cm (3 inches), a thickness of about 1.1 thick and about 5.72 cm (2.25 inches) at maximum width with a neck of about 2.5 cm (an inch) in diameter. The concentrate had a density of about 1.1 gm/cc, 4 cP and color sufficient to provide an indication of color in the final beverage.

**Table 4B: Impact Splatter Factor of each nozzle (simulated)**

| **Nozzle** | **Easy Squeeze Pressure (40) (inch WC)** | **Medium Squeeze Pressure (60) (inch WC)** | **Hard Squeeze Pressure (100) (inch WC)** | **Average Impact Splatter Factor** |
|---|---|---|---|---|
| O_015 | 1 | 1 | 1 | 1.00 |
| O_020 | 1 | 1 | 1 | 1.00 |
| O_025 | 1 | 1 | 1 | 1.00 |
| V21_070 | 1 | 1 | 1 | 1.00 |
| V21_100 | 1 | 1 | 1 | 1.00 |
| V21_145 | 3 | 1 | 2 | 2.00 |
| V21_200 | 3 | 4 | 2 | 3.00 |

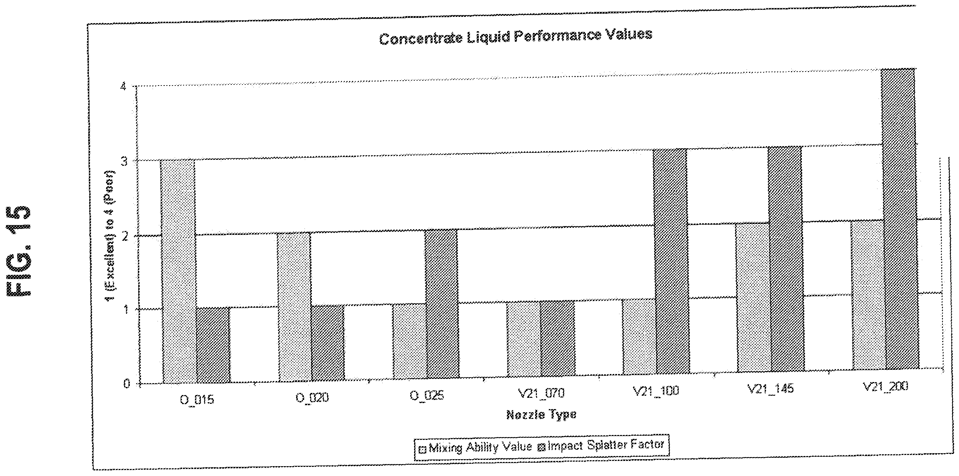

FIG. 15 illustrates the Mixing Ability Values and the Impact Splatter Factors found for each of the nozzles tested using the actual squeeze testing. These test values can be combined, i.e., added, to form Liquid Concentrate Performance Values for each nozzle. Through testing, the 0.18 cm (0.070 inch) X Slit was found to produce a Liquid Concentrate Performance Value of 2 by both mixing excellently while also creating minimal impact splatter. Following this, the 0.051 cm (0.020 inch) and the 0.064 cm (0.025 inch) Square Edge Orifices were both found to have a value of 3 to produce a good overall end product. The 0.038 cm (0.015 inch) Square Edge Orifice and the 0.254 cm (0.100 inch) X Slit both received a value of 4, while the 0.368 cm (0.145 inch) and the 0.200 X Slit received Values of 5 and 6 respectively. From these results, the Liquid Concentrate Performance Value for the nozzle utilized with the container described herein should be in the range of 1-4 to produce a good product, and preferably 2-3.

The average velocity of each nozzle was then calculated using both an easy and a hard force. For each nozzle, a bottle with water therein was positioned horizontally at a height of 7 inches from a surface. The desired force was then applied and the distance to the center of the resulting water mark was measured within 0.25 ft. Air resistance was neglected. This was performed three times for each nozzle with both forces. The averages are displayed in Table 5 below.

**Table 5: The average velocity calculated for each nozzle using an easy force and a hard force**

| **Nozzle** | **Velocity (mm/s) (Easy)** | **Velocity (mm/s) (Hard)** |
|---|---|---|
| O_015 | 5734 | 7867 |
| O_020 | 6000 | 8134 |
| O_025 | 6400 | 7467 |
| V21_070 | 6400 | 7467 |
| V21_100 | 5600 | 8134 |
| V21_145 | 4934 | 6134 |
| V21_200 | 4000 | 5334 |

Each nozzle was then tested to determine how many grams per second of fluid are dispensed through the nozzle for both the easy and hard forces. The force was applied for three seconds and the mass of the dispelled fluid was weighed. This value was then divided by three to find the grams dispelled per second. Table 6 below displays the results.

**Table 6: Mass flow for easy and hard forces for each nozzle**

| **Nozzle** | **Mass Flow (g/s) (Easy)** | **Mass Flow (g/s) (Hard)** |
|---|---|---|
| O_015 | 0.66 | 0.83 |
| O_020 | 1.24 | 1.44 |
| O_025 | 1.38 | 1.78 |
| V21_070 | 1.39 | 2.11 |
| V21_100 | 2.47 | 3.75 |
| V21_145 | 2.36 | 4.16 |
| V21_200 | 2.49 | 4.70 |

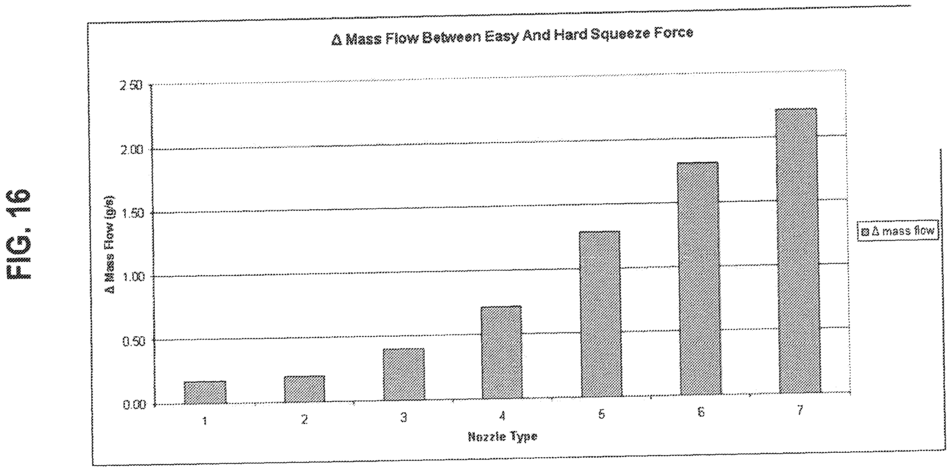

As illustrated in FIG. 16, the graph shows the difference of the Mass Flow between the easy and hard forces for each of the nozzles. When applied to a liquid concentrate setting, a relatively small delta value for Mass Flow is desirable because this means that a consumer will dispense a generally equal amount of liquid concentrate even when differing squeeze forces are used. This advantageously supplies an approximately uniform mixture amount, which when applied in a beverage setting directly impacts taste, for equal squeeze times with differing squeeze forces. As shown, the 0.254 cm (0.100 inch), the 0.368 cm (0.145 inch), and the 0.508 cm (0.200 inch) X Slit openings dispense significantly more grams per second, but also have a higher difference between the easy and hard forces, making a uniform squeeze force more important when dispensing the product to produce consistent mixtures.

The mass flow for each nozzle can then be utilized to calculate the time it takes to dispense 1 cubic centimeter (cc) of liquid. The test was performed with water, which has the property of 1 gram is equal to 1 cubic centimeter. Accordingly, one divided by the mass flow values above provides the time to dispense 1 cc of liquid through each nozzle. These values are shown in Table 7A below.

**Table 7A: Time to Dispense 1 cubic centimeter of liquid for easy and hard forces for each nozzle**

| **Nozzle** | **Time to Dispense 1 cc (s) (Easy)** | **Time to Dispense 1 cc (s) (Hard)** |
|---|---|---|
| O_015 | 1.52 | 1.20 |
| O_020 | 0.81 | 0.69 |
| O_025 | 0.72 | 0.56 |
| V21_070 | 0.72 | 0.47 |
| V21_100 | 0.40 | 0.27 |
| V21_145 | 0.42 | 0.24 |
| V21_200 | 0.40 | 0.21 |

Ease of use testing showed that a reasonable range of time for dispensing a dose of liquid concentrate is from about 0.3 seconds to about 3.0 seconds, which includes times that a consumer can control dispensing the liquid concentrate or would be willing to tolerate to get a reasonably determined amount of the liquid concentrate. A range of about 0.5 sec per cc to about 0.8 sec per cc provides a sufficient amount of time from a user reaction standpoint, with a standard dose of approximately 2 cc per 240 ml or approximately 4 cc for a standard size water bottle, while also not being overly cumbersome by taking too long to dispense the standard dose. The 0.051 cm (0.020 inch) Square Edge Orifice, the 0.064 cm (0.025 inch) Square Edge Orifice, and the 0.18 cm (0.070 inch) X Slit reasonably performed within these values regardless of whether an easy or a hard force was utilized. A dispense test and calculations were performed using "easy," "medium," and "hard" air injections to simulate corresponding squeeze forces in order to calculate the amount of time required to dispense 4 cc of beverage concentrate from a container having about 49 cc of concentrate in a total volume of about 65 cc. First, the mass flow rate is determined by placing the container upside-down and spaced about 6 inches above a catchment tray disposed on a load cell of an Instron. The aforementioned pressure application system then simulates the squeeze force for an "easy," "medium," and "hard" squeeze. The output from the Instron can be analyzed to determine the mass flow rate. Second, the mass flow rate can then be used to calculate the time required to dispense a desired volume of concentrate, e.g., 2 cc, 4 cc, etc.

Generally, the dispense time should not be too long (as this can disadvantageously result in greater variance and less consistency in the amount dispensed) nor should the dispense time be too short (as this can disadvantageously lead to an inability to customize the amount dispensed within a reasonable range). The time to dispense can be measured on a scale of 1 to 4, where 1 is a readily controllable quantity or dose that is of sufficient duration to permit some customization without too much variation (e.g., an average of between 1-3 seconds for 4 cc); 2 is a dose that is of slightly longer or shorter duration but is still controllable (e.g., an average of between 0.3 and 1 or between 3 and 4 seconds for 4 cc); 3 is a dose that is difficult to control given that it is either too short or too long in duration, permitting either minimal opportunity for customization or too large of an opportunity for customization (e.g., an average of about 0.3 (with some but not all datapoints being less than 0.3) or between about 4 and 10 for 4 cc); and 4 is a dose that is even more difficult to control for the same reasons as for 3 (e.g., an average of less than 0.3 (with all datapoints being less than 0.3) or greater than 10 seconds for 4 cc). The resulting Dispense Time Rating is then determined based upon an average of the "easy," "medium," and "hard" simulated squeezes. The results set forth in Table 7B.

**Table 7B: Time to dispense 4 cc of beverage concentrate (simulated squeeze)**

| **Nozzle** | **Mass Flow (g/s) (Easy)** | **Mass Flow (g/s) (Hard)** |
|---|---|---|
| O_015 | 0.66 | 0.83 |
| O_020 | 1.24 | 1.44 |
| O_025 | 1.38 | 1.78 |
| V21_070 | 1.39 | 2.11 |
| V21_100 | 2.47 | 3.75 |
| V21_145 | 2.36 | 4.16 |
| V21_200 | 2.49 | 4.70 |

The Mixing Ability Value, the Impact Splatter, and the Dispense Time Rating (whether actual or simulated squeeze) can be multiplied together to determine a Liquid Concentrate Dispense Functionality Value (LCDFV). A low LCDFV is preferred. For example, between 1 and 4 is preferred. Examples of the LCDFV for the aforementioned simulated squeeze Mixing Ability Value, the Impact Splatter, and the Dispense Time Rating are set forth in the below Table 7C. The results show that the V21_070 valve and the O_025 orifice have the lowest LCDFV. While the O_025 orifice has a lower LCDFV value than the V21_070 valve, the orifice would fail the Drip Test.

**Table 7C: Time to dispense 4 cc of beverage concentrate (simulated squeeze)**

| **Nozzle** | **LCDFV** |
|---|---|
| O_015 | 6.7 |
| O_020 | 3.3 |
| O_025 | 1.3 |
| V21_070 | 2.0 |
| V21_100 | 2.7 |
| V21_145 | 10.0 |
| V21_200 | 12.0 |

The areas of each of the openings are shown in Table 8 below.

**Table 8: Nozzle opening areas for easy and hard forces**

| **Nozzle** | **Opening Area (mm²) (Easy)** | **Opening Area (mm²) (Hard)** |
|---|---|---|
| O_015 | 0.114 | 0.114 |
| O_020 | 0.203 | 0.203 |
| O_025 | 0.317 | 0.317 |
| V21_070 | 0.217 | 0.283 |
| V21_100 | 0.442 | 0.461 |
| V21_145 | 0.479 | 0.678 |
| V21_200 | 0.622 | 0.881 |

The SLA nozzle circular opening areas were calculated using πr². The areas of the X Slits were calculated by multiplying the calculated dispense quantity by one thousand and dividing by the calculated velocity for both the easy and the hard force.

Finally, the momentum-second was calculated for each nozzle using both the easy and the hard force. This is calculated by multiplying the calculated mass flow by the calculated velocity. Table 9A below displays these values.

**Table 9A: Momentum-second of each nozzle for easy and hard forces (actual squeeze)**

| **Nozzle** | **Momentum * Second (Easy)** | **Momentum * Second (Hard)** |
|---|---|---|
| O_015 | 3803 | 6556 |
| O_020 | 7420 | 11686 |
| O_025 | 8854 | 15457 |
| V21_070 | 8875 | 15781 |
| V21_100 | 13852 | 30502 |
| V21_145 | 11660 | 25496 |
| V21_200 | 9961 | 25068 |

The momentum-second of each nozzle was also determined using the above-referenced procedure for generating "easy," "medium," and "hard" simulated squeezes using a pulse of pressurized air. The mass flow rate (set forth in Table 9B) was multiplied by the velocity (set forth in Table 9C) to provide the momentum-second for the simulated squeezes (set forth in Table 9D).

**Table 9B: Mass flow rate (g/s) of each nozzle for simulated squeezes**

| **Nozzle** | **Easy Squeeze Pressure (40) (inch WC)** | **Medium Squeeze Pressure (60) (inch WC)** | **Hard Squeeze Pressure (100) (inch WC)** | **Average Mass Flow Rate (g/s)** |
|---|---|---|---|---|
| O_015 | 0.3 | 0.3 | 0.6 | 0.4 |
| O_020 | 1.0 | 1.2 | 1.4 | 1.2 |
| O_025 | 1.6 | 1.6 | 2.0 | 1.7 |
| V21_070 | 1.2 | 2.0 | 3.0 | 2.1 |
| V21_100 | 8.0 | 11.3 | 25 | 14.8 |
| V21_145 | 14.0 | X | X | X |
| V21_200 | X | X | X | X |

**Table 9C: Initial Velocity (mm/s) of each nozzle for simulated squeezes**

| **Nozzle** | **Easy Squeeze Pressure (40) (inch WC)** | **Medium Squeeze Pressure (60) (inch WC)** | **Hard Squeeze Pressure (100) (inch WC)** | **Average Initial Velocity (mm/s)** |
|---|---|---|---|---|
| O_015 | 2400 | 4000 | 5600 | 4000 |
| O_020 | 4000 | 5600 | 7200 | 5600 |
| O_025 | 4000 | 4800 | 6000 | 4934 |
| V21_070 | 4400 | 5200 | 7600 | 5734 |
| V21_100 | 4400 | 4800 | 6400 | 5200 |
| V21_145 | 4000 | 4800 | 6400 | 5067 |
| V21_200 | 4000 | 4800 | 5600 | 4800 |

**Table 9D: Momentum-second of each nozzle for easy, medium and hard simulated squeezes**

| **Nozzle** | **Easy Squeeze Pressure (40) (inch WC)** | **Medium Squeeze Pressure (60) (inch WC)** | **Hard Squeeze Pressure (100) (inch WC)** | **Average Momentum * Second** |
|---|---|---|---|---|
| O_015 | 720 | 1200 | 3360 | 1760 |
| O_020 | 4000 | 6720 | 10081 | 6934 |
| O_025 | 6400 | 7680 | 12001 | 8694 |
| V21_070 | 5280 | 10401 | 22801 | 12827 |
| V21_100 | 35202 | 54403 | 160010 | 83205 |
| V21_145 | 56003 | X | X | X |
| V21_200 | X | X | X | X |

Momentum-second values correlate to the mixing ability of a jet of liquid exiting a nozzle because it is the product of the mass flow and the velocity, so it is the amount and speed of liquid being dispensed from the container. Testing, however, has shown that a range of means that a consumer will dispense a generally equal amount of liquid concentrate even when differing squeeze forces are used. This advantageously supplies an approximately uniform mixture for equal squeeze times with differing squeeze forces. The results for the actual and simulated squeezes are consistent. As shown above, mimicking the performance of an orifice with a valve can result in more consistent momentum-second values for easy versus hard squeezes, as well as for a range of simulated squeezes, while also providing the anti-drip functionality of the valve.

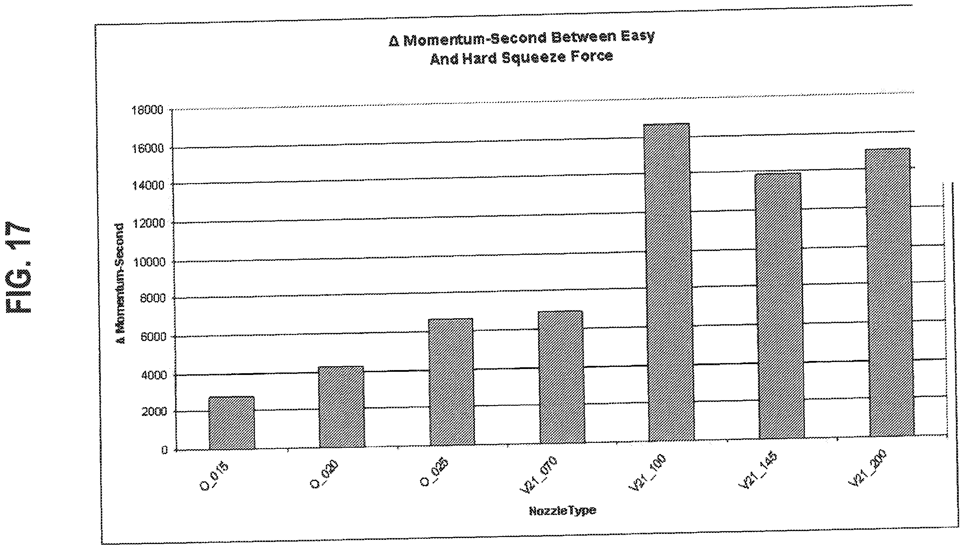

As illustrated in FIG. 17, the graph shows the difference for the Momentum-Second values between the easy and hard forces for each nozzle. When applied to a liquid concentrate setting, momentum-second having a relatively small delta value for Momentum-Second is desirable because a delta value of zero coincides with a constant momentum-second regardless of squeeze force. A delta momentum-second value of less than approximately 10,000, and preferably 8,000 provides a sufficiently small variance in momentum-second between an easy force and a hard force so that a jet produced by a container having this range will have a generally equal energy impacting a target liquid, which will produce a generally equal mixture. As shown, all of the Orifice openings and the 0.18 cm (0.070 inch) X Slit produced a Δ momentum-second that would produce generally comparable mixtures whether utilizing a hard force and an easy force. Other acceptable delta momentum-second values can be about 17,000 or less, or about 12,000 or less.

Yet another important feature is the ability of a liquid concentrate container to dispense liquid concentrate generally linearly throughout a range of liquid concentrate fill amounts in the container when a constant pressure is applied for a constant time. The nozzles were tested to determine the weight amount of liquid concentrate dispensed at a pressure that achieved a minimum controllable velocity for a constant time period when the liquid concentrate was filled to a high, a medium, and a low liquid concentrate level within the container. Table 10 shows the results of this test below.

**Table 10: Dispense amount with variable liquid concentrate fill**

| **Nozzle** | **High (g)** | **Medium (g)** | **Low (g)** |
|---|---|---|---|
| O_015 | 0.45 | 0.49 | 0.52 |
| O_020 | 0.89 | 0.82 | 0.82 |
| O_025 | 1.25 | 1.34 | 1.38 |
| V21_070 | 0.78 | 0.89 | 0.90 |
| V21_100 | 2.14 | 2.21 | 2.19 |
| V21_145 | 4.20 | 3.46 | 4.37 |
| V21_200 | 4.60 | 4.74 | 5.80 |

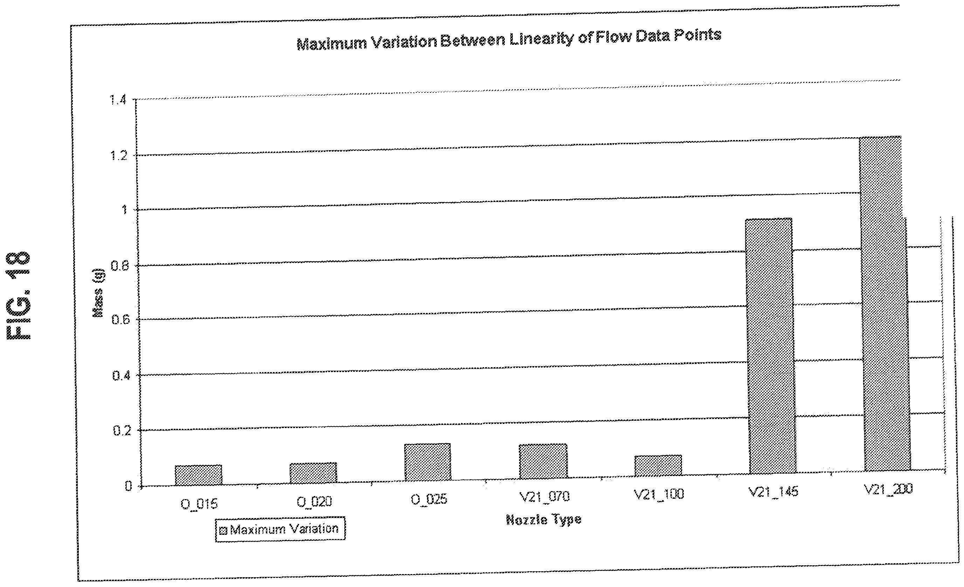

As discussed above, a good linearity of flow, or small mass change as the container is emptied, allows a consumer to use a consistent technique, consistent pressure applied for a consistent time period, at any fill level to dispense a consistent amount of liquid concentrate. FIG. 18 shows a graph displaying the maximum variation between two values in Table 10 for each nozzle. As shown in FIG. 18 and in Table 10, the maximum variation for all of the Square Edge Orifice nozzles and the 0.18 cm (0.070 inch) and the 0.254 cm (0.100 inch) X Slit nozzles is less than 0.15 grams spanning a high, medium, or low fill of liquid concentrate in the container. The 0.368 cm (0.145 inch) and the 0.508 cm (0.200 inch) X Slit nozzles, however, were measured to have a maximum variation of 0.91 grams and 1.2 grams respectively. This is likely due to the variability inherent in the altering opening area with different pressures in combination with the larger amount of liquid flowing through the nozzle. Accordingly, a desirable nozzle has a maximum variation for linearity of flow at varying fill levels of less than 0.5 grams, and preferably less than 0.3 grams, and more preferably less than 0.15 grams.

As mentioned above, the container is configured to protect against unintentional dripping. In the exemplary container, this is accomplished using the slit designed to flex to allow product to be dispensed from the container and at least partially return to its original position to seal against unwanted flow of the liquid through the valve. The protection against dripping does not mean that the container will never drip under any conditions. Instead, the container is designed to provide for substantial protection against dripping. This can be measured using a Drip Index Value. The method of calculating a Drip Index Value includes providing an empty container, providing a communication path in the bottom region of the container between atmosphere and the interior of the container that has a cross-sectional area of at least 20% of the maximum cross-sectional area of the container, filling the container with water through the communication path, inverting the container so that the exit is pointing downwardly, removing or opening any lid covering or obstructing the exit, and counting the number of drops of water that drop from the container over in the span of 10 minutes. The number of drops counted is the Drip Index Value. In a preferred container, such as that described herein having the X slit valve V21_070 and illustrated in FIG. 6 (but without the depression), testing showed that there was a Drip Index Value of zero. This indicates that the container provides at least substantial protection against dripping. While a Drip Index Value of zero is preferred, other suitable values can include any number in the range of 1-10, with lower values being preferred.

The containers described herein are suitable for many different types of liquid concentrates. Preferably, the liquid concentrates are advantageously suitable for cold filling while maintaining shelf stability for at least twelve months at ambient temperatures. This can be achieved through a combination of low pH and alcohol content to provide stability to what can be otherwise unstable ingredients. The compositions and associated methods can also include beverage concentrates having low pH, reduced water activity, and alcohol. Reduced water activity can occur through additional salts. Preferably, the compositions are not carbonated (e.g., with CO2). In one embodiment, the concentrate can be diluted at least 25 times to make a potable drink. Preferably the concentrate can have a pH of between about 1.4 to 3.0 or 3.5 (only 1.7 to 2.4 is in accordance with the present invention) and from between about 3 to 35 percent alcohol by weight.

Some beverages and beverage concentrates, such as juices, are hot filled (for example, at 93 degrees Celsius) during packaging, then sealed to prevent microbial growth. Other beverages, such as diet sodas, may contain preservatives and can be cold filled during packaging (i.e., without pasteurization). The preferred compositions, given their combination of pH and alcohol levels, do not need additional thermal treatments or mechanical treatments such as pressure or ultrasound to reduce microbial activity either before or after packing. It is noted though that the compositions are not precluded from receiving such treatments either. The packaging material also preferably does not require additional chemical or irradiation treatment. While the manufacturing environment should be maintained clean, there is no need for UV or use of sterilant materials. In short, the product, processing equipment, package and manufacturing environment should be subject to good manufacturing practices, but need not be subject to aseptic packaging practices. As such, the present compositions can allow for reduced manufacturing costs.

Typically the concentrates can be non-potable, and can optionally have colors (artificial and/or natural), flavors (artificial and/or natural), sweeteners (artificial and/or natural), caffeine, electrolytes (including salts), and the like. Optional preservatives, such as sorbate or benzoate, would not be needed to maintain shelf stability in some embodiments. Flavors would be stable in the acidic environment. Dilution of alternate embodiments can be cold-filled, and capable of mixing with water without additional stirring. The alcohol content of the final beverage should not exceed 0.5 percent weight.

The beverage concentration can be 25 to 500 times to form the concentrate. Preferable range can be about 75 to 200 times concentrated, and most preferred is about 75 to 160 times. The concentrate may be non-potable prior to dilution and allow diluting and mixing in water. In addition to water, other potable liquids can be used in dilution, such as juices, sodas, teas, coffee and the like. By way of example to clarify the term concentration, a concentration of 75 times would be equivalent to 1 part concentrate to 74 parts water (or other potable liquid).

In determination of preferred dilutions (and thus concentrations) of the potable ready-to-drink (RTD) beverage, several factors, in addition to final alcohol percent weight, can be considered such as RTD beverage sweetness and acid. For example, the dilution can be expressed as an amount of dilution needed to provide a ready to drink beverage having a sweetness level equivalent to the amount of sweetness of a beverage containing about 5 to 25 percent sugar. For example, the desired dilution can be expressed, by analogy, in a Brix degree equivalent of 5 to 25 and preferably in the range of about 8 - 14. A Brix degree can be defined as a unit of sugar content of an aqueous solution. A Brix of 1 degree can correspond to 1 gram of sucrose in 100 grams of solution. For purposes of the present embodiments, a Brix of 1 degree can, by analogy, compare to the amount of sweetener, natural or artificial, needed to provide the amount of sweetness expected from an equivalent amount of sucrose. Alternately, dilution can be expressed as obtaining a desired RTD beverage having an acid range of about 0.01 to 0.8 percent weight. Also, dilution can also be expressed as obtaining desired RTD beverage having preservatives in the range of up to about 500ppm, but preferably up to 100 ppm.

The acid content of the concentrates can be any edible/food-grade organic or inorganic acids such as citric acid, malic acid, adipic acid, tartaric acid, fumaric acid, phosphoric acid, lactic acid, and the like. The pH range of the concentrate is from 1.7 to 2.4, and most preferably about 2.2.

An acid buffer such as a conjugated base of any acid (e.g., sodium citrate and potassium citrate), acetates, phosphates or any salt of an acid is added to adjust the pH of the concentrate when a concentrate's pH is lower than is desired. For example, a potassium citrate can be used to bring the pH from about 1.3 (without a buffer) or 2.0 to about 2.3. See Table 11, below, for three examples. In other instances, an undissociated salt ion of the acid can buffer the overall concentration. In one embodiment, the pH of the concentrate provides desired antimicrobial effects, while not being so acidic as to break down the flavor component. An added benefit of the buffer may be improved organoleptics of the final product in its diluted form. The buffer can give a better overall "rounded" sour flavor to the ready-to-drink diluted concentrate. For example, citrate with citric acid can increase tartness better than if only citric acid is used. The acid:buffer ratio is from 1:1 to 4000:1, preferably between 1:1 - 40:1, and most preferably about 7:1 to about 15:1. In any event, the predetermined acid:buffer ratio contributes to antimicrobial effects and flavor stabilization.

**Table 11: Formulas for Buffer Analysis**

| | **Variant pH 1.5 %** | **Variant pH 2.0 %** | **Variant pH 2.5 %** |
|---|---|---|---|
| **Water** | 60.925 | 58.675 | 55.195 |
| **Citric Acid** | 24.5 | 24.5 | 24.5 |
| **Potassium Sorbate** | 0.050 | 0.050 | 0.050 |
| **Potassium Citrate** | 0.000 | 2.250 | 5.730 |
| **Lemon Lime** | 11.5 | 11.5 | 11.5 |
| **Sucralose** | 2.0 | 2.0 | 2.0 |
| **AceK** | 1 | 1 | 1 |
| **Color** | 0.025 | 0.025 | 0.025 |
| **Total Sum** | 100.0000 | 100.0000 | 100.0000 |

Table 12, set forth below, describes the degree of taste variation of test samples by pH over a 4 week period. Lemon flavored liquid concentrate samples of the present compositions were prepared at three different pH levels, 1.5, 2.0 and 2.5 and stored at three different storage temperatures, minus 18 degrees C (0 degrees F), 21 degrees C (70 degrees F), and 32 degrees C (90 degrees F). The samples stored at -18 C (0 F) were the controls and it was assumed there would be no significant degradation of the flavor over the testing period. After 2 and 4 weeks, the liquid concentrate samples stored at -18 C (0 F) and 21 C (70 F) were removed from their storage conditions and diluted with water to the ready-to drink strength. The ready-to-drink samples were then allowed to reach room temperature and then evaluated by panelists (4 - 6 people). First, the panelists were asked to taste the pH 1.5 sample stored at -18 C (0 F) and compare that to the pH 1.5 sample stored at 21 C (70 F). Next, the panelists rated the degree of difference for the overall flavor. The rating scale was from 1 -10, with the range from 1 -3 being "very close", 4-6 being "different" and from 7-10 being "very different". The same test was then repeated with samples at pH levels of 2.0 and 2.5. Before moving to the next pH level panelists were asked to have crackers and rinse with water. Samples stored at 32 °C (90oF) were also evaluated after 1 week, 3 weeks, 4 weeks and 5 weeks and compared to the Control samples stored at -18 C (0 F) to evaluate the degree of difference in a manner described above for samples stored at 21 C (70 F). The results show that as pH is increased, flavor stability increases.

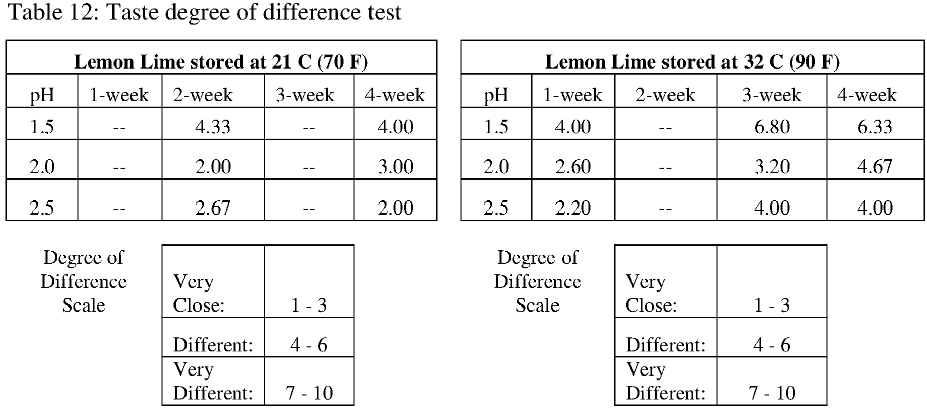

Edible antimicrobials in the present embodiments can include various edible alcohols such as ethyl alcohol, propylene glycol or various combinations thereof. Alcohol content of the concentrate can be from about 5 percent to about 35 percent on a total weight basis, preferably between about 5 percent to about 15 percent by weight, and most preferably about 10 percent by weight.

There are many additives that can be combined in the concentrates. Flavorings can include fruits, tea, coffee and the like and combinations thereof. The concentrate may also contain coloring, stabilizers, gums, salts or nutrients in any combination so long as the desired pH and alcohol percentage by weight are maintained. The preferred formulations have stable flavor and color sensory characteristics that do not significantly change in the high acid environment. In some formulations, natural or artificial preservatives can be added to supplement antimicrobial stability, such as EDTA, sodium benzoate, potassium sorbate, sodium hexametaphosphate, nisin, natamycin, polylysine, and the like. Supplemental preservatives, such as potassium sorbate or sodium benzoate, can be preferred in formulations having, for example, less than 20 percent by weight propylene glycol and/or less than 10 percent by weight ethyl alcohol. Nutrient additives can include vitamins, minerals, antioxidants, and the like.

In some embodiments, the concentrate includes a sweetener. Useful sweeteners include sucralose, aspartame, stevia, saccharine, monatin, luo han guo, neotame, sucrose, fructose, cyclamates, acesulfame potassium or any other caloric or non-caloric sweetener and combinations thereof.

Turning now to the below tables, there are shown specific exemplary embodiments of various compositions of the concentrates (* = not within the scope of the invention).

**Table 13: Cold filled beverage concentrate (first example)**

| | **TARGET** | **RANGE** | |
|---|---|---|---|
| **INGREDIENTS** | **Percent weight** | **MIN** | **MAX** |
| Water | 47.00 | 30.00 | 65.00 |
| Citric Acid | 20.00 | 15.00 | 40.00 |
| K-Citrate | 0.75 | 0.00 * | 4.00 |
| Flavor | 17.45 | 10.00 | 30.00 |
| Sucralose | 1.00 | 0.50 | 4.00 |
| Ace K | 0.75 | 0.10 | 2.00 |
| Ethanol | 13.00 | 5.00 | 30.00 |
| Colors | 0.05 | 0.005 | 5 |
| SUM: | 100.00 | | |

**Table 14: Cold filled beverage concentrate (second example)**

| | **TARGET** | **RANGE** | |
|---|---|---|---|
| **INGREDIENTS** | **Percent weight** | **MIN** | **MAX** |
| Water | 49.00 | 30.00 | 65.00 |
| Citric Acid | 16.00 | 5.00 | 35.00 |
| Malic Acid | 5.00 | 1.00 | 30.00 |
| K-Citrate | 0.71 | 0.00 * | 4.00 |
| Flavor | 15.99 | 10.00 | 30.00 |
| Sucralose Dry | 1.50 | 0.50 | 4.00 |
| Ace K | 0.50 | 0.10 | 2.00 |
| Ethanol | 11.00 | 5.00 | 30.00 |
| Colors | 0.30 | 0.03 | 5 |
| SUM: | 100.00 | | |

**Table 15: Cold filled beverage concentrate (third example)**

| | **TARGET Low Electrolytes** | **TARGET High Electrolytes** | **Range** | | |
|---|---|---|---|---|---|
| **INGREDIENTS** | **Percent weight** | **Percent weight** | **MIN** | **MAX** | |
| Water | 55.41 | 42.17 | 20.00 | 70.00 | |
| Citric Acid | 17.9 | 17.9 | 5.00 | 30.00 | |
| Potassium Sorbate | 0.05 | 0.05 | 0.00 | 0.10 | |
| K-Citrate | 1.5 | 2.9 | 0.00 * | 5.00 | |
| Flavor/alcohol | 12.2 | 12.2 | 1.00 | 40.00 | |
| Sucralose | 2.01 | 2.01 | 0.00 | 20.00 | |
| Malic Acid | 4.5 | 4.5 | 0.00 | 30.00 | |
| Ace K | 0.99 | 0.99 | 0.00 | 5.00 | |
| Coloring | 0.17 | 0.20 | 0.00 | 2.00 | |
| Mono K-Phosphate | 1.19 | 4.13 | 0.00 | 10.00 | |
| Salt (NaCl) | 4.08 | 12.95 | 0.00 | 20.00 | |
| Sum w/o Water: | 44.59 | 57.83 | | | |
| Total Sum: | 100 | 100 | **Range** | | |

| | | | **Low** | | **High** |
|---|---|---|---|---|---|
| Water Activity - of concentrate: | 0.93 | 0.78 | 0.6 | | Up to 1.0 |
| Sodium per 230 g (8-oz) drink (mg) | 35.00 | 111.00 | 1.00 | | 200.00 |
| Potassium per 230 g (8-oz) drink (mg) | 20.00 | 50.00 | 1.00 | | 100.00 |

**Table 16: Cold filled beverage concentrate (fourth example)**

| | **TARGET** |
|---|---|
| **INGREDIENTS** | **Percent weight** |
| Water | 67.07 |
| Citric Acid | 11.8 |
| Potassium Sorbate | 0.05 |
| K-Citrate | 1.08 |
| Flavor/alcohol | 8.2 |
| Sucralose Liquid | 4.9 |
| Malic Acid | 3.0 |
| Ace K | 0.6 |
| Mono K-Phosphate | 0.4 |
| NaCl | 2.9 |
| SUM: | 100 |
| ACTUAL pH | 1.88 |
| ACTUAL DENSITY | 1.09 |

**Table 17: Cold filled beverage concentrate (fifth example)**

| | **TARGET** |
|---|---|
| **INGREDIENTS** | **Percent weight** |
| Water | 61.03 |
| Citric Acid | 11.2 |
| Potassium Sorbate | 0.05 |
| K-Citrate | 1.02 |
| Flavor/alcohol | 7.8 |
| Sucralose Liquid | 4.7 |
| Malic Acid | 2.8 |
| Ace K | 0.6 |
| Mono K-Phosphate | 2.0 |
| NaCl | 8.8 |
| Total Sum: | 100 |
| ACTUAL pH | 1.78 |
| ACTUAL DENSITY | 1.16 |

The examples of Tables 13 through 17 include compositions for a cold-filled beverage concentrate using a combination of low pH, such as less than about 3.5, and preferably in the range of about 1.7 to 2.4. The alcohol component can include ethanol, propylene glycol, and the like and combinations thereof. The alcohol component can be in the range of about 1 to about 35 percent weight, and preferably in the range of about 3 to 35 percent by weight. The alcohol component is included in the described examples as combined with the flavor. Nevertheless, total alcohol by weight would still be within these ranges irrespective of combinations with flavors. Also, the examples of Tables 13 through 17 add various supplemental salt combinations in the range of up to about 35 percent by weight, and preferably in the range of about 4 to 15 percent by weight. Colors can be artificial or natural and can be in the range of 0.005 to 5.0 percent, preferably in the range of about 0.005 to 1 percent. In formulations using natural colors, a higher percent weight may be needed to achieve desired color characteristics.

For illustrative purpose only, in Tables 13 through 17, in addition to the K-citrate, the composition further includes supplemental components to lower the formulation's water activity, e.g., salts such as sodium chloride (NaCl) and mono potassium phosphate. These supplemental salts can lower water activity of the concentrate to increase anti-microbial stability. The "Low Electrolytes" target has low levels of the supplemental NaCl and mono potassium phosphate and the "High Electrolytes" target has higher levels of the supplemental NaCl and mono potassium phosphate. It is noted though that higher and lower salt supplement ranges are possible within the scope of these examples. The added salts may result in a liquid beverage concentrate composition that can be concentrated to at least 75 times, and preferably up to 100 times; and may result in reduced water activity in the range of about 0.6 to up to 1 (preferably in the range of about 0.75 up to 1.0).

The lower water activity further improves shelf life and improves antimicrobial activity while also allowing reduction of alcohol and supplemental preservatives. Water activity can be defined as a ratio of water vapor pressure in an enclosed chamber containing a food to the saturation water vapor pressure at the same temperature. Thus, water activity can indicate of the degree to which unbound water is available to act as a solvent or otherwise degrade a product or facilitate microbiological reactions. (See generally, U.S. Pat. 6,482,465 Cherukuri, et al.). The salts can be salts containing Na+ (sodium); K+ (potassium); Ca2+ (calcium); Mg2+ (magnesium); Cl- (chloride); HPO4-2 (hydrogen phosphate); HCO3- (hydrogen carbonate); and the like; and various combinations thereof. Other added salts can include electrolytes, such as: sodium citrate; mono sodium phosphate; potassium chloride; magnesium chloride; sodium chloride, calcium chloride; and the like; and combinations thereof. An added advantage of these salts provides electrolytes for sports type drinks. These beverage concentrate compositions, within the ranges as presented, are predicted to exhibit antimicrobial affects without use of preservatives and component stability for at least one year at ambient temperatures.

To test the antimicrobial effect of the present embodiments, studies were conducted using a variety of pH levels and alcohol levels to test which combinations either exhibit negative or no microbial growth. Generally, at high pH (i.e., about 3 or higher) and low alcohol content (i.e., less than about 5 percent by weight), some mold growth was observed. Formulations that showed negative or no microbial growth also passed sensory evaluation tests for organoleptics.

Specifically, the following Tables 18 and 19 show antimicrobial test results for several variations of potential beverage concentrates varied by pH and alcohol content (Table 18 for EtOH and Table 19 for propylene glycol. The EtOH antimicrobial tests were divided into three culture types: bacteria, yeast and mold and tested over at least 3 months. The bacteria cultures contained: Gluconobacter oxydans, Gluconacetobacter diazotrophicus, Gluconacetobacter liquefaciens, and/or Gluconobacter sacchari. The yeast cultures contained Zygosaccharomyces bailii, Saccharomyces cerevisiae, Candida tropicalis, and/or Candida lypolytica. The mold cultures contained: Penicillium spinulosum, Aspergillus niger, and/or Paecilomyces variotii. The table indicates which cultures had no, or negative, growth compared to the controls, with * indicating no microbial growth and *** indicating some microbial growth. Mold and yeast studies were also performed for samples where the alcohol was propylene glycol. For these samples, the pH was about 2.3 and had a water activity of about 0.85 to 0.95. Table 19 shows a positive correlation between increased levels of propylene glycol and increased anti-microbial effects.

**Table 18: Antimicrobial test results**

| **Variant** | **pH** | **% EtOH** | **Bact** | **Yeast** | **Mold** | **All** |
|---|---|---|---|---|---|---|
| 1 | 3.0 | 15 | * | * | * | * |
| 2 | 3.0 | 10 | * | * | * | * |
| 3 | 3.0 | 5 | * | *** | *** | *** |
| 4 | 2.5 | 15 | * | * | * | * |
| 5 | 2.5 | 10 | * | * | * | * |
| 6 | 2.5 | 5 | * | * | * | * |
| 7 | 2.0 | 15 | * | * | * | * |
| 8 | 2.0 | 10 | * | * | * | * |
| 9 | 2.0 | 5 | * | * | * | * |
| 10 | 1.5 | 15 | * | * | * | * |
| 11 | 1.5 | 10 | * | * | * | * |
| 12 | 1.5 | 5 | * | * | * | * |
| C1 | 3.0 | 0 | * | *** | *** | *** |
| C2 | 1.5 | 20 | * | * | * | * |
| C3 | 1.5 | 0 | * | * | *** | *** |
| C4 | 3.0 | 20 | * | * | * | * |

**Table 19: Antimicrobial test results**

| **Mold Data** | |
|---|---|
| **Propylene Glycol Level** | **Week-4** |
| 0% | 100 |
| 10% | 1,200 |
| 15% | 300 |
| 20% | <1 |
| 25% | <1 |

| **Yeast Data** | |
|---|---|
| **Propylene Glycol Level** | **Week-4** |
| **0%** | **<100** |
| **10%** | **<100** |
| **15%** | **<100** |
| **20%** | **<100** |
| **25%** | **<10** |

Micro-challenge studies of the embodiments showed similar low or no antimicrobial activity. This included studies of formulations with salts to lower the water activity. Specifically, in one formulation having a composition percent weight of water at about 68 percent; citric acid at about 2 percent; potassium citrate at about 1.5 percent; flavoring/alcohol at about 8.5 percent; sucralose at about 1.9 percent; malic acid at about 17 percent; and Ace K at about 1.1 percent had water activity of about 0.94. When salt (NaCl) is substituted for water at about 7 percent weight and 13 percent weight, water activity dropped to about 0.874 and 0.809 respectively. These water activity levels (e.g., around 0.8) in combination with the low pH and alcohol surprisingly provided an antimicrobial effect typically only found in previous formulations having water activities of less than about 0.6. See Table 20, below. Thus, the combination of the low pH, alcohol (for example propylene glycol, ethanol, and the like, and various combinations thereof) and lowered water activity create a hostile environment for microorganisms. In combination with pH and water activity, preferred embodiments can show an bactericidal effect at about 10 percent ethanol and 20 percent propylene glycol and a bacteriostatic effect at about 10 percent propylene glycol.

**Table 20: Formulas for Water Activity Micro-challenge**

| **Ingredients** | **Formula 1** | **Formula 2** | **Formula 3** |
|---|---|---|---|
| | Water Activity 0.940 % | Water Activity 0.874 % | Water Activity 0.809 % |
| **Water** | 68 | 61 | 55 |
| **Citric Acid** | 2 | 2 | 2 |
| **Salt (Nad)** | 0 | 7 | 13 |
| **Potassium Citrate** | 1.5 | 1.5 | 1.5 |
| **Flavor/alcohol** | 8.5 | 8.5 | 8.5 |
| **Sucralose - dry** | 1.9 | 1.9 | 1.9 |
| **Malic Acid** | 17 | 17 | 17 |
| **Ace K** | 1.1 | 1.1 | 1.1 |
| **Total Sum** | **100** | **100** | **100** |

Manufacturing of the present invention can include any number of variations to achieve the beverage concentrate with the desired pH and alcohol content. In general, the method can include providing water and additives, then providing at least 5 percent alcohol by weight, then providing an acid component to adjust the pH to be less than about 3 (only 1.7 to 2.4 is in accordance with the invention). This includes adding buffers.

Other examples of suitable liquid concentrates are set forth in the below Table 21. These examples can be used in combination with the aforementioned containers to provide for an extended shelf life concentrated beverage package. These examples can also be used independently, e.g., alone or with another type of container. It is noted that the flavoring fraction of the formulation, as listed, includes a combined flavor/alcohol component. The alcohol by percentage weight of the formulation is added parenthetically. The alcohol can be ethyl alcohol, propylene glycol, and combinations thereof and are used as a solvent for the flavoring. The range of alcohol can be from about 75 percent to about 95 percent of the flavoring fraction of the formulation and preferably about 90 percent.

**Table 21: Exemplary beverage concentrates**

| **FORMULATIONS:** | **1** | **2** | **3** | **4** | **5** | **6** | **7** | **8** |
|---|---|---|---|---|---|---|---|---|
| ***Ingredients (by formulation* % *weight)*** | % | % | % | % | % | % | % | % |
| **Water** | 60-65 | 52-58 | 60-65 | 60-65 | 60-65 | 70-75 | 55-60 | 58-63 |
| **Citric Acid** | 1-4 | 15-20 | 1-4 | 5-9 | 1-4 | 0-1 | 15-20 | 15-20 |
| **Potassium Citrate** | 1-3 | 1-3 | 1-3 | 1-3 | 1-3 | 0-1 | 1-3 | 1-3 |
| **Sucralose 25 %** | 5-10 | 5-10 | 5-10 | 5-10 | 5-10 | 5-10 | 5-10 | 5-10 |
| **Malic Acid** | 15-20 | 3-5 | 15-20 | 10-14 | 13-17 | 2-6 | 0-2 | 0-2 |
| **Acesulfame K** | 0.5-1.5 | 0.5-1.5 | 0.5-1.5 | 0.5-1.5 | 0.5-1.5 | 0.5-1.5 | 0.5-1.5 | 0.5-1.5 |
| **Potassium Sorbate** | 0.01-0.1 | 0.01-0.1 | 0.01-0.1 | 0.01-0.1 | 0.01-0.1 | 0.01-0.1 | 0.01-0.1 | 0.01-0.1 |
| **Flavoring (Alcohol)** | 7-12 (6-11) | 10-14 (9-13) | 7-12 (6-11) | 7-12 (6-11) | 10-14 (9-13) | 12-16 (11-14) | 10.5-16 (9-14) | 6-10 (5-9) |
| **Caffeine Taurine Blend** | | | | | | | 2-4 | 2-4 |
| **Trisodium Citrate** | | | | | | | 1-3 | 1-3 |
| **Color** | 0.05-0.2 | 0.051-0.21 | 0.065-0.28 | 0.1-0.9 | 0.021-0.104 | 0.201-1.004 | 0.101-0.504 | 0.101-0.509 |

The combination of the nozzle 132 and the cover 126 with the stopper 148 and inner plug 149, as illustrated in FIGS. 19 and 20, advantageously provides multiple layers of protection against leakage, which is particularly important when used in combination with the foregoing beverage concentrates. This exceptional protection is evident when compared with a screw-type cap, such as can be found on a bottle of Visine, but is much easier to use, e.g., a flip top lid versus a screw cap. As set forth in below Table 22, when the nozzle V21_070 is used in the container the amount of oxygen that enters the closed container over time is comparable to that of the screw-cap Visine bottle.

**Table 22: Barrier properties measured as amount of oxygen entering over time**

| **Day** | | **1** | | | **2** | | **4** |
|---|---|---|---|---|---|---|---|
| | | **10:30** | **11:15** | **12:00** | **10:00** | **4:00** | **10:30** |
| Variable | Sample # | % Oxygen | % Oxygen | % Oxygen | % Oxygen | % Oxygen | % Oxygen |
| V21_070 Container | 1 | 0.14 | 0.15 | 0.19 | 2.04 | 2.15 | 2.87 |
| | 2 | 0.02 | 0.11 | 0.18 | 3.21 | 3.4 | 4.61 |
| | 3 | 0.04 | 0.07 | 0.09 | 1.12 | 1.2 | 1.65 |
| Visine | 1 | 0.05 | 0.09 | 0.13 | 2.56 | 2.77 | 4.1 |
| | 2 | 0.15 | 0.16 | 0.18 | 2.25 | 2.43 | 3.58 |

## Claims

1. A liquid concentrate for beverages, comprising:
acid;
flavoring;
buffer;
at least 0.5 percent alcohol by weight;
water activity in the range of 0.6 to 1; and
wherein the acid and buffer are provided in a weight ratio range of 1:1 to 4000: 1, and wherein the concentrate has a pH in the range of 1.7 to 2.4.

2. The liquid concentrate for beverages of claim 1, wherein the alcohol is at least 0.5 percent by weight ethyl alcohol.

3. The liquid concentrate for beverages of claim 1, wherein the alcohol is at least 0.7 percent by weight propylene glycol.

4. The liquid concentrate for beverages of claim 1, wherein the alcohol is at least 20 percent by weight propylene glycol.

5. The concentrate of claim 1, wherein the alcohol is selected from the list comprising, ethanol, propylene glycol, and combinations thereof.

6. The concentrate of claim 1 wherein the alcohol is in the range of 3 to 35 percent by weight.

7. The concentrate of claim 1, further comprising salt in the range of up to 35 percent weight.

8. The concentrate of claim 1, wherein the salt is in the range of 4 to 15 percent weight.

9. The concentrate of claim 1, wherein the salt is selected from the list comprising sodium citrate; mono sodium phosphate; potassium chloride; sodium chloride, magnesium chloride; calcium chloride; and combinations thereof.

10. The concentrate of claim 1, wherein the salt is selected from the list comprising salts containing Na+ (sodium); K+ (potassium); Ca2+ (calcium); Mg2+ (magnesium); Cl-(chloride); HPO4-2 (hydrogen phosphate); HCO3- (hydrogen carbonate); and combinations thereof.

11. The concentrate of claim 1, wherein the water activity is in the range of 0.75 to about up to 1.0.

12. The concentrate of claim 1, wherein the acid:buffer ratio is 1:1 to 40:1.

13. The concentrate of claim 1, wherein the acid:buffer ratio is 7:1 to 15:1.

## Patentansprüche

1. Flüssiges Getränkekonzentrat, umfassend:
Säure;
Aroma;
Puffer;
mindestens 0,5 Gew.-% Alkohol;
Wasseraktivität im Bereich von 0,6 bis 1; und
wobei die Säure und der Puffer in einem Gewichtsverhältnisbereich von 1:1 bis 4000:1 bereitgestellt werden, und wobei das Konzentrat einen pH-Wert im Bereich von 1,7 bis 2,4 aufweist.

2. Flüssiges Getränkekonzentrat nach Anspruch 1, wobei der Alkohol mindestens 0,5 Gew.-% Ethylalkohol ist.

3. Flüssiges Getränkekonzentrat nach Anspruch 1, wobei der Alkohol mindestens 0,7 Gew.-% Propylenglykol ist.

4. Flüssiges Getränkekonzentrat nach Anspruch 1, bei dem der Alkohol mindestens 20 Gew.-% Propylenglykol ist.

5. Konzentrat nach Anspruch 1, wobei der Alkohol aus der Liste ausgewählt ist, die Ethanol, Propylenglykol und Kombinationen davon umfasst.

6. Konzentrat nach Anspruch 1, bei dem der Alkohol im Bereich von 3 bis 35 Gew.-% liegt.

7. Konzentrat nach Anspruch 1, das ferner Salz im Bereich von bis zu 35 Gew.-% umfasst.

8. Konzentrat nach Anspruch 1, bei dem das Salz im Bereich von 4 bis 15 Gew.-% liegt.

9. Konzentrat nach Anspruch 1, bei dem das Salz aus der Liste umfassend Natriumcitrat, Mononatriumphosphat, Kaliumchlorid, Natriumchlorid, Magnesiumchlorid, Calciumchlorid und Kombinationen davon ausgewählt ist.

10. Konzentrat nach Anspruch 1, wobei das Salz aus der Liste ausgewählt ist, die Salze umfasst, die Na+ (Natrium), K+ (Kalium), Ca2+ (Calcium), Mg2+ (Magnesium), Cl- (Chlorid), HPO4-2 (Hydrogenphosphat), HCO3- (Hydrogencarbonat) und Kombinationen davon enthalten.

11. Konzentrat nach Anspruch 1, bei dem die Wasseraktivität im Bereich von 0,75 bis etwa 1,0 liegt.

12. Konzentrat nach Anspruch 1, bei dem das Säure-Puffer-Verhältnis 1:1 bis 40:1 beträgt.

13. Konzentrat nach Anspruch 1, bei dem das Säure-Puffer-Verhältnis 7:1 bis 15:1 beträgt.

## Revendications

1. Liquide concentré pour boissons, comprenant :
un acide ;
un aromatisant ;
un tampon ;
au moins 0,5 pour cent d'alcool en poids ;
une activité de l'eau dans la plage de 0,6 à 1 ; et
dans lequel l'acide et le tampon sont fournis dans un rapport pondéral dans la plage de 1:1 à 4000:1, et dans lequel le concentré présente un pH dans la plage de 1,7 à 2,4.

2. Liquide concentré pour boissons selon la revendication 1, dans lequel l'alcool est pour au moins 0,5 pour cent en poids de l'alcool éthylique.

3. Liquide concentré pour boissons selon la revendication 1, dans lequel l'alcool est pour au moins 0,7 pour cent en poids du propylène glycol.

4. Liquide concentré pour boissons selon la revendication 1, dans lequel l'alcool est pour au moins 20 pour cent en poids du propylène glycol.

5. Concentré selon la revendication 1, dans lequel l'alcool est choisi dans la liste comprenant de l'éthanol, du propylène glycol, et des combinaisons de ceux-ci.

6. Concentré selon la revendication 1 dans lequel l'alcool est dans la plage de 3 à 35 pour cent en poids.

7. Concentré selon la revendication 1, comprenant en outre du sel dans la plage allant jusqu'à 35 pour cent en poids.

8. Concentré selon la revendication 1, dans lequel le sel est dans la plage de 4 à 15 pour cent en poids.

9. Concentré selon la revendication 1, dans lequel le sel est choisi dans la liste comprenant du citrate de sodium ; du phosphate mono-sodique ; du chlorure de potassium ; du chlorure de sodium, du chlorure de magnésium ; du chlorure de calcium ; et des combinaisons de ceux-ci.

10. Concentré selon la revendication 1, dans lequel le sel est choisi dans la liste comprenant des sels contenant Na+ (sodium) ; K+ (potassium) ; Ca2+ (calcium) ; Mg2+ (magnésium) ; Cl- (chlorure) ; HPO4-2 (phosphate d'hydrogène) ; HCO3- (carbonate d'hydrogène) ; et des combinaisons de ceux-ci.

11. Concentré selon la revendication 1, dans lequel l'activité de l'eau est dans la plage de 0,75 jusqu'à environ 1,0.

12. Concentré selon la revendication 1, dans lequel le rapport acide:tampon est de 1:1 à 40:1.

13. Concentré selon la revendication 1, dans lequel le rapport acide:tampon est de 7:1 à 15:1.
